(19) Europäisches Patentamt
European Patent Office
Office européen des brevets

(11) **EP 2 807 230 B1**

(12) **EUROPEAN PATENT SPECIFICATION**

(45) Date of publication and mention of the grant of the patent:
**08.08.2018 Bulletin 2018/32**

(51) Int Cl.:
**C09K 19/54** *(2006.01)*        **G02F 1/1334** *(2006.01)*
**G02F 1/167** *(2006.01)*

(21) Application number: **13701955.0**

(22) Date of filing: **21.01.2013**

(86) International application number:
**PCT/EP2013/051016**

(87) International publication number:
**WO 2013/110564 (01.08.2013 Gazette 2013/31)**

(54) **A METHOD FOR MICROENCAPSULATING ELECTRO-OPTICAL FLUID, DISPLAY DEVICE AND POWDER INCLUDING MICROENCAPSULATED ELECTRO-OPTICAL FLUID**

VERFAHREN ZUR MIKROVERKAPSELUNG EINES ELEKTROOPTISCHEN FLUIDS, VORRICHTUNG UND PULVER MIT EINEM SOLCHEN MIKROVERKAPSELTEN ELEKTROOPTISCHEN FLUID

PROCÉDÉ POUR MICRO-ENCAPSULER UN FLUIDE ÉLECTRO-OPTIQUE, DISPOSITIF ET POUDRE COMPRENANT UN TEL FLUIDE ÉLECTRO-OPTIQUE MICRO-ENCAPSULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2012  IE S20120033**
**23.01.2012  IE S20120034**

(43) Date of publication of application:
**03.12.2014  Bulletin 2014/49**

(73) Proprietors:
• **Vlyte Innovations Limited**
**Shannon Airport, Co. Clare (IE)**
• **Vlyte Limited**
**County Clare (IE)**

(72) Inventor: **O'KEEFFE, Donal**
**Parteen, County Clare (IE)**

(74) Representative: **Hanna Moore + Curley**
**Garryard House**
**25/26 Earlsfort Terrace**
**Dublin 2, D02 PX51 (IE)**

(56) References cited:
**US-A- 5 142 389        US-A1- 2003 129 247**
**US-B1- 6 271 898**

EP 2 807 230 B1

**Description**

**Related Applications**

The present invention relates to: co-pending European application entitled "Chiral Nematic, Liquid Crystal Display Device" which claims priority from Irish Application No. S2012/0033 and co-pending US application entitled "Reflective Display Device" which claims priority from Irish Application No. S2012/0035.

**Field**

The present invention relates to a method for microencapsulating electro-optical fluid.

**Background**

The displays of today's notebooks, flat-screen TVs and mobile phones are made with glass substrates and have the inherent fragility that incorporation of thin sheets of glass implies. For example, in a flat panel LCD TV each glass substrate may be 0.8mm thick or less and span up to 1.5M in diagonal. Flexible displays made from transparent, thin plastic sheets offer an alternative approach to glass, one that promises light weight, robust, bendable, and lower cost displays.

But the use of transparent, flexible polymer sheets to replace the rigid, glass substrates in conventional displays poses a problem: what to do with the optical fluid sandwiched between the substrates, in particular how is the gap between the substrates containing the electro-optical fluid layer to be maintained if:

a) all or part of a flexible display is bent or deformed about an arc,
b) localized pressure is applied, for example a finger push on an overlaid touch screen, and
c) shock, or gravity over time, causes the electro-optical fluid to flow and the flexible polymer substrates bulge to accommodate that flow.

The prior art provides three types of technical approach to the problem posed by the electro-optical fluid: the first are devices generally described as 'polymer dispersed', the second are microencapsulated (synonymous with encapsulated), and the third are replicated structures. All three provide containment for the electro-optical fluid so that instead of the substrates sandwiching a fluid, the substrates sandwich discrete volumes of fluid surrounded by a transparent polymer that spans between the substrates to provide a solid electro-optical layer or structure. Ideally, the electro-optical layer adheres to and flexes with the polymer substrates, and retains the electro-optical fluid sealed inside.

In two of these three approaches - polymer dispersed and replicated structures - the polymer walls that surround the electro-optical fluid are formed in situ on the polymer substrate and the electro-optical fluid is coated as a solution onto the substrate.

Patent application PCT/EP2008/005151 by the applicant gives information on the polymer dispersed approach. Eink Holdings' US 7,411,719 discloses the polymer dispersed approach applied to electrophoretic ink devices. Information on replicated polymer structures is available from one of its proponents Sipix Inc. and their website (www.sipix.com) references articles on the use of the replicated polymer structures approach with electrophoretic ink and liquid crystal.

By contrast, with microencapsulation, the electro-optical fluid is encapsulated by a thin polymer wall in the form of a capsule or shell, typically spherical in shape, before being coated onto a substrate. This means that the electro-optical fluid is in a solid form - discrete, sealed spherical volumes inside a polymer wall or skin - before being coated onto a substrate and used in a device.

The prior art microencapsulation methods suffer from a number of problems and limitations due to the lack of a robust microencapsulating shell wall. The known methods for microencapsulation can be divided into two types:

a) The hydrophilic shell type: the bulk polymer in a shell has a dominant hydrophilic nature. Generally the prior art methods require the majority by weight of the polymer wall precursors to be water soluble and to be solubilized in an aqueous phase at some point during the microencapsulation process.

b) The hydrophobic shell type: the bulk polymer in a shell has a dominant hydrophobic nature. Generally the prior art methods require the majority by weight of the polymer wall precursors to be soluble or partly soluble in the electro-optical fluid to be microencapsulated.

The former type includes conventional and complex coacervation, and interfacial polymerization processes, and up to now coacervation has been demonstrated for electrophoretic ink microencapsulation. As this type of micro-

encapsulation uses at least one significant polymer wall component that is soluble in an aqueous phase the resulting shell or capsule wall polymer will be permeable to moisture, or even hydroscopic. Similarly, compatible polymer matrix or binder materials for shells prepared by these methods are by necessity also susceptible to ingress by atmospheric moisture. A problem arises because electro-optical fluid of the electrophoretic ink type is subject to degradation by moisture, and so is a display device's active matrix backplane. Consequently electrophoretic ink devices prepared from microencapsulated electro-optical fluid of this first type are subject to degradation by high humidity unless special hermetic sealant walls or layers are employed, and this increases cost and complexity as for example disclosed in Eink Holdings' US 7,411,719.

In addition, it is known that hydrophilic polymers are susceptible to degradation by exposure to UV (causing yellowing) limiting display devices prepared from microencapsulated fluid of this first type to indoor applications unless a separate UV filter is used (adding further cost).

In summary, the first type of prior art microencapsulation methods used to microencapsulate electrophoretic ink lack environmental robustness due to susceptibility to degradation by atmospheric moisture and UV light. This is equally applicable to liquid crystal similarly microencapsulated. An example of the latter is US 6,120,701.

But not only do the capsules or shells of the complex coacervation type (and related types) lack environmental robustness, they also lack mechanical robustness. The capsules or shells are known to soften when the binder material is added ahead of coating onto a substrate, indeed this aspect is relied on to create non-spherical capsules in the dried layer as the solvent evaporates, see Eink Holdings' US 7,109,968 for example. The microcapsules in the resultant dried film are also known to rupture if the film is bent beyond a certain limit.

The second type of microencapsulation method known from the prior art also has associated problems. In this method the encapsulating wall is generally formed from hydrophobic monomers having a slight hydrophilic functionality. Ahead of microencapsulating, the monomers are solubilized partly or completely in the hydrophobic, electro-optical fluid and as polymerization proceeds the polymer phase separates from the electro-optical fluid and forms at the interface with the aqueous phase and microencapsulates the electro-optical fluid with a hydrophobic polymer wall. For examples of this method see Rohm and Haas Company's US 5,976,405 or PolyDisplay's US 7,397,530. In general, hydrophobic polymer is not permeable to moisture and has significantly improved tolerance to UV exposure compared to hydrophilic polymers.

The problems with the prior art, hydrophobic, microencapsulation methods relate to the characteristics of the polymer wall, in particular, the compatibility of such shells or capsules with the polymer matrix that makes up the electro-optical layer of a device. The known microencapsulating methods produce a wall lacking in resistance to the hydrophobic solution typical of polymer matrix precursors (including oligomers and monomers) to the extent that:

a) a shell's polymer may be partly solubilized resulting in the shell disintegrating and/or the electro-optical fluid leaking from the shell and solubilizing in the polymer matrix precursor solution; and

b) the polymer matrix precursor solution penetrating a shell's wall and becoming solubilized in the electro-optical fluid inside the shell.

These undesirable effects all lead to non-functioning, or impaired functioning shells or capsules in the cured polymer matrix.

The preceding complex coacervation method did not have this shell wall resistance problem because its polymer matrix or binder is hydrophilic and so components of its precursor solution are not soluble in a shell's hydrophobic, electro-optical fluid. In general, hydrophilic shells are compatible with forming a hydrophilic polymer matrix and conversely hydrophobic shells are compatible with a hydrophobic polymer matrix.

## Summary Of The Invention

The first aspect of the present invention applies to the microencapsulation of electro-optical fluid of the electrophoretic ink and liquid crystal types. References in this document to electro-optical fluid are applicable to both types.

According to the first aspect, a method for microencapsulating electro-optical fluid comprises:
dispersing the electro-optical fluid as discrete droplets in a continuous aqueous phase, said droplets having at least partly solubilized therein crosslinkable polymer precursors, wherein the level of crosslinking monomers within the polymer precursors by weight is > 25%; and thermally initiating free-radical polymerisation of said polymer precursors to microencapsulate droplets of said electro-optical fluid inside a generally spherical polymer shell, the polymer wall of said shell having a densely-crosslinked, polymer-network structure to provide chemical resistance, and the polymer wall of said shell having spacing within the crosslinks of said densely-crosslinked, polymer network structure to provide mechanical flexibility.

In embodiments of the first aspect, as polymer-network, structured fractions grow during polymerization, they gel leading to the formation of a single macroscopic molecule, and on completion of polymerisation, the microencapsulation of the electro-optical fluid inside a highly-crosslinked, solid, robust, shell. The polymer-network, structured shell wall so formed is transparent to specular light.

Preferably, during polymerisation, the polymer-network is the only polymer structure type that forms; and grows to form gel fractions (as opposed to sol fractions) at the interface between the electro-optical fluid droplet and the surrounding aqueous phase.

The prior art makes no such requirement as regards the polymer-network structure and may use solely monofunctional monomer, and so is either incapable of providing any polymer-network type structure, as disclosed in US 5,976,405, Rohm & Haas; or may crosslink the polymer post microencapsulation as disclosed in US 7,041,304, Pacific Corporation.

In embodiments of the first aspect, the level of crosslinking monomers to overall monomer by weight is preferably ≥ 50%, more preferably ≥ 75%, and most preferably approximately 100%.

The first aspect requires not just the presence of some polymer-network structure, typical even when less than 5% of the total monomer is crosslinker, but a sufficiently high level of crosslinker such that the polymer-network is the only type of polymer structure.

The gel fractions have a sufficiently hydrophilic nature to be driven out of the electro-optical fluid to continue growing at the interface between an electro-optical fluid droplet and the aqueous phase. The density of crosslinks between chains is sufficient that the polymer-network fractions become almost immediately insoluble in the electro-optical fluid.

The monomer components of said polymer precursors (of microencapsulation) are chosen such that:

> a) the monomer solution comprises hydrophobic (and in particular, lipophilic) monomers having just sufficient water solubility (or hydrophilic functionality) to cause the resultant polymer to be driven to the interface between the electro-optical droplet and the aqueous phase that surrounds the droplet;
> b) the level of crosslinking monomers relative to the overall monomer solution, taking into account its reactivity with itself and the other monomers, is at least sufficient to ensure that as polymerisation nears completion, the available monomer is substantially of the crosslinking type;
> c) the level of the crosslinking monomer, and its reactivity with itself and the other monomers, is sufficient to form a polymer-network type structure (that is fully crosslinked polymer) and said polymer is a glassy, amorphous solid up to its melting temperature (it has no glass transition temperature);
> d) the level of crosslinking monomer, and its reactivity with itself and the other monomers, is sufficient to ensure that the polymer-network structure is sufficiently densely crosslinked as to be impermeable to polymer matrix precursors (wall resistance);
> e) the backbone of the crosslinking monomer spaces apart the polymer-network type structure (the crosslinks act as spacers) just sufficiently to provide flexibility in the bulk polymer (mechanical robustness).

Preferably, the functional groups in the crosslinking monomer are sufficiently spaced apart so that the reactivity of one is not affected by the polymerisation of another; and the reactivities of the different monomers in the polymer precursor solution are balanced to ensure uniform resultant polymer properties and the avoidance of monofunctional monomers which could otherwise form sol fractions.

Preferably, at least the majority of the crosslinking monomer has two functional groups.

Preferably, the backbone functionality of the crosslinking monomer ensures that polymer interaction with the microencapsulated, electro-optical fluid is minimal.

Preferably, the monomer components are chosen from acrylate or methacrylate types.

Preferably, at least the majority of the crosslinking monomer has a diol unit in its backbone.

Preferably, at least the majority of the crosslinking monomer is chosen from: ethylene glycol dimethacrylate, ethylene glycol diacrylate, diethylene glycol dimethacrylate, diethylene glycol diacrylate, triethylene glycol dimethacrylate, triethylene glycol diacrylate, propylene glycol dimethacrylate, propylene glycol diacrylate, dipropylene glycol dimethacrylate, dipropylene glycol diacrylate, glycerol dimethacrylate, glycerol diacrylate, neopentyl glycol dimethacrylate, neopentyl glycol acrylate, butanediol dimethacrylate, butanediol diacrylate, hexanediol dimethacrylate, and hexanediol diacrylate.

Preferably, monofunctional monomers are added to the crosslinking monomers to match the refractive index of the polymer of a shell to its microencapsulated electro-optical fluid.

Preferably, the thermal initiators are lipophilic and are soluble in electro-optical fluid.

Preferably the monomer components of a shell having multiple layers are the same for each layer.

Shells produced according to the microencapsulation method of the first aspect resist penetration by hydrophobic solutions (i.e., polymer matrix precursors) and possess mechanical flexibility. Indeed, the shells can have sufficient strength and flexibility that, for example, a film incorporating such shells coated and cured in a polymer matrix or binder can be bent to a diameter of curvature of approximately 3cm or subjected to localized force without rupturing the shells or causing the shells to lose their spherical shape.

The microencapsulation method avoids sol fractions in the electro-optical fluid post microencapsulation (i.e., avoids solubilized polymer in the electro-optical fluid as a consequence of microencapsulation).

The microencapsulation method allows shells to be recovered as a fine powder.

Display devices incorporating electro-optical fluid microencapsulated according to the first aspect are impermeable to atmospheric moisture as well as having improved UV stability. These devices include:

1. Electrophoretic display devices incorporating hydrophobic shells or capsules in a hydrophobic polymer matrix.

2. Liquid crystal light control films for smart window applications incorporating hydrophobic shells or capsules in a hydrophobic polymer matrix.

3. Liquid crystal display devices incorporating fully crosslinked shells or capsules in a hydrophobic polymer matrix.

4. Microencapsulated electro-optical fluid in the form of discrete shells or capsules (i.e., fluid encapsulated in a solid form) characterized by shells whose polymer has polymer-network type structure and is essentially a single macroscopic molecule (i.e., it is fully crosslinked polymer).

5. Fine (non-aggregated), electro-optical shell powder that permits classification of the power (e.g., by range of diameters), that permits mixing of different electro-optical powders while preserving the isolation of the respective electro-optical fluids, and that is a component of electro-optical ink.

6. Solvent-free, hydrophobic, electro-optical ink (shells suspended in polymer matrix precursors).

7. Solvent-free, electro-optical ink for screen-printing onto a substrate in displays and light control films.

In addition to display devices such as monochrome and full colour displays, electro-optical fluid microencapsulated according to the first aspect also has application in areas such as:

a) light control films for use in glazing applications that are capable of switching between transparent and opaque states, or that are capable of attenuating light providing a light dimming function, these are generally known as "switchable windows", "dimmable windows", "smart windows" or "smart glass";

b) see-through displays that comprise a matrix of pixels each capable of being selectively operated in a transparent, opaque or gray-scale state, for use in applications like shop front windows, or the window of a bus or train, without blocking visual access through the window or screen (see for example PCT Application Nos. PCT/IE 02/00079 and PCT/IE 02/00124);

c) light shutters and displays whether made with flexible substrates (e.g. film) or rigid substrates (e.g. glass); and

d) bistable (i.e., optical states are stable in the absence of power - power is only used when switching from one state to the other) light shutters and displays.

According to a second aspect of the present invention there is provided a method of making a colour display device comprising:

forming on a substrate a first set of discrete, substantially solid, uniform thickness, electro-optical regions each corresponding to subpixels of said display device, each region comprising a first electro-optical ink including microencapsulated coloured, electro-optical fluid in a polymer matrix; and
screen-printing in respective print cycles at least one subsequent set of electro-optical regions onto a remaining portion of the substrate only, said subsequent set of electro-optical regions comprising a differently coloured, electro-optical ink from said first electro-optical ink.

Preferably, said screen-printing comprises:

a) locating a mask over said substrate and in contact with said first set of electro-optical regions and spaced apart from the remainder of said substrate, said mask including a plurality of apertures located in register with respective locations of said subsequent set of electro-optical regions, said apertures each having a cross-sectional area less than the required extent of said respective ones of said subsequent set of electro-optical regions;

b) screen-printing said differently coloured, electro-optical ink through said mask;

c) removing said mask;

d) allowing said ink in said subsequent set of electro-optical regions to settle to a thickness approximately equal to that of said first plurality of electro-optical regions; and

e) curing said ink in said subsequent set of electro-optical regions to provide said subsequent set of electro-optical regions of uniform thickness with said first set of electro-optical regions.

The electro-optical fluid can be of the electrophoretic ink or liquid crystal types.

Preferably, the method comprises repeating steps a) to e) for successive sets of electro-optical regions.

In embodiments of the second aspect, the first set of subpixels are screen printed and cured to a solid form and act as a mechanical stop before printing with subsequent ink(s). Curing the first printed ink avoids a subsequent print's mask (mesh or stencil) distorting the first print when it comes into contact with it.

The second aspect overcomes the problems associated with screen printing subsequent ink(s), by causing the screen-printing squeegee to push excess ink through a subpixel's aperture in the mask sufficiently that this excess ink extends beneath the plane of the underside of the mask and comes into broad contact with the substrate's subpixel area.

For subpixels of the first print and subsequent print(s) of equal area, the mask apertures for the subsequent print(s) are reduced in area with respect to their subpixel area so that the volume of ink transferred on snap-off of the mask equates to the corresponding volume of the first ink print.

The ink transferred to a subpixel levels with time and fills substantially or totally its subpixel area after being transferred on snap-off of the mask. This results in a levelled height or thickness substantially the same as the height of the first ink's print.

Preferably, each electro-optical ink is paste-like and has a viscosity from 1,000 to 50,000 centipoise (cP), more preferably from 3,500cP to 25,000cP, and most preferably from 5,000cP to 15,000cP.

Preferably, each electro-optical ink exhibits thixotropic behavour (i.e. dependence of viscosity on time), and this behaviour can circumvent the conflicting requirements of having an ink with sufficiently low viscosity that it levels well and yet sufficiently high viscosity to maintain material cohesion while printing and avoid undesirable spreading of the transferred ink outside the subpixel area (into neighbouring subpixel areas).

Advantageously, each electro-optical ink comprises hydrophobic shells produced according to the first aspect and dispersed in hydrophobic polymer matrix precursors, such inks exhibiting significant thixotropic behaviour.

Advantageously, the distance an ink must spread to fill its subpixel area is minimized by using the thinnest mask possible for subsequent colour print(s). Preferably, the mask comprises an electroformed stencil.

In embodiments, the profile of the ink transferred for the first print can be made match that for the subsequent print(s) by using a mask for the first print having similar dimension apertures to the masks of subsequent prints but increased thickness to the mask of subsequent prints.

Preferably, the same ink formulation with differently coloured ink is used for each of the first and subsequent print(s).

Preferred each mask aperture is centered with respect to an associated electro-optical region (i.e., an associated subpixel).

Preferably, each mask aperture is not more than 70 microns in dimension less than the corresponding dimension of an associated electro-optical region.

In embodiments, the cured electro-optical ink has sufficient strength to withstand the pressure applied to it by the screen-printing squeegee in subsequent print cycle(s). The ink should also be sufficiently cured to minimize or avoid tackiness of the electro-optical region's top surface, as this would inhibit snap-off of the mask in subsequent print(s).

Where the required thickness of the various sets of electro-optical regions is greater than can be provided with a single screen-print, for example, because sufficient ink cannot be pushed through a mask aperture to make broad contact with the substrate beneath, then two or more print phases for each set of electro-optical regions can be employed, each set printing a fraction of the required thickness.

Preferably, the electro-optical regions are formed on respective electrodes formed on said substrate and the method comprises treating any gap on the substrate surface between electrodes with a low surface energy coating to hinder wetting of such areas by an ink. This causes ink to remain at or inside a subpixel area as it levels.

Examples of colour display devices produced in accordance with the second aspect include:

1. Full colour, electrophoretic display devices;

2. Full colour, electrophoretic display devices incorporating hydrophobic shells or capsules in a hydrophobic polymer matrix;

3. Full colour, liquid crystal display devices; and

4. Full colour, liquid crystal display devices incorporating hydrophobic shells or capsules in a hydrophobic polymer matrix.

**Brief Description of the Drawings**

Embodiments of the invention will now be described, by way of example, with reference to the accompanying drawings, in which:

Figure 1 is a cross sectional view showing a nematic liquid crystal microencapsulated in accordance with an embodiment of the present invention. The polymer in the shell wall has polymer-network type structure.

Figure 2 is similar to figure 1 except an electrophoretic ink is microencapsulated.

Figure 3 is a micrograph of shells (or capsules) from example 5.

Figure 4 is a cross sectional view showing a display device having an electro-optical layer of shells dispersed in a polymer matrix (synonymous with binder).

Figure 5 is a cross sectional view showing a colour display device having a colour patterned, electro-optical layer.

Figure 6 is a cross sectional view of a glazing structure incorporating a liquid crystal film including electro-optical fluid microencapsulated according to an embodiment of the present invention.

Figure 7 is a cross sectional view showing a full-colour, display device having minimal void space between the prints of subpixels.

Figure 8 is a cross sectional view showing the outcome of screen printing and curing a first coloured ink.

Figure 9a is a cross sectional view showing a second, coloured ink as it is printed on a screen printer.

Figure 9b is a cross sectional view showing a second coloured ink's print just after being printed on a screen printer.

Figure 9c is a cross sectional view showing a second coloured ink's print after it has levelled and been cured.

Figure 10 is a cross sectional view showing a third, coloured ink as it is printed on a screen printer.

Figure 11 is a cross sectional view showing a first, coloured ink as it is being printed on a screen printer.

Figure 12 shows a plan view of a coloured display device having coloured subpixels laid out in an RGB matrix.

Figure 13 shows a plan view of a coloured display device having coloured subpixels laid out in a PenTile RGBW matrix.

**Detailed Description of the Embodiments**

Methods to microencapsulate electro-optical fluid in accordance with embodiments of the present invention use a suspension polymerisation technique whereby hydrophobic, electro-optical fluid is dispersed as discrete droplets in a continuous aqueous phase, preferably water, and said droplets have partly or completely solubilized therein hydrophobic polymer precursors (a monomer solution) that when polymerised by thermally-initiated, free-radical polymerisation, microencapsulate a hydrophobic, electro-optical fluid droplet inside a hydrophobic, spherical polymer shell (synonymous with capsule), the polymer wall of the shell deriving its resistance to chemicals from its densely-crosslinked, polymer-network structure, and deriving its mechanical flexibility from the spacing within crosslinks.

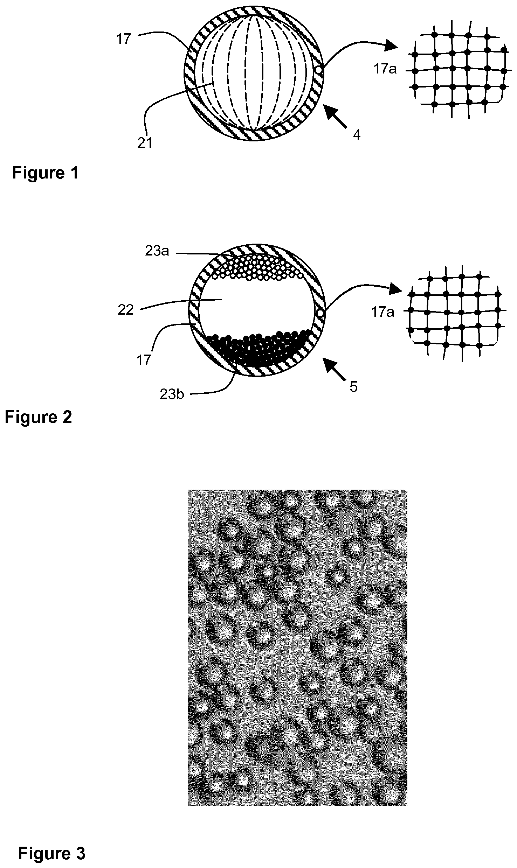

Figures 1 and 2 show hydrophobic, electro-optical fluid microencapsulated in accordance with embodiments of the invention. In figure 1 the electro-optical fluid 21 is nematic liquid crystal, however it can be any known liquid crystal type (nematic, cholesteric, or smectic) with or without dichroic dye solubilized in the liquid crystal phase, and it is microencapsulated by hydrophobic polymer 17 whose polymer structure is densely-crosslinked, polymer-network type and shown schematically by 17a. Liquid crystal shell 4 is generally spherical, resistant to chemicals, mechanically robust and has smooth inner and outer polymer surfaces.

Figure 2 is similar to 1 except the hydrophobic, electro-optical fluid is electrophoretic ink and the shell 5 is an electrophoretic ink shell. It comprises a suspending fluid 22, and charged white pigment particles 23a and charged black pigment particles 23b. The charged particles are shown in a field-aligned state. Exemplary electrophoretic ink fluids are disclosed in Eink Holdings' US 7,109,968 or Xerox's US 7,417,787 and also in the documents referenced therein.

Figure 3 is a micrograph of the nematic liquid crystal shells (as per 4 in figure 1) of example 5.

The starting point for embodiments of the present invention is a stable emulsion of electro-optical fluid in an aqueous phase, preferably water, in the form of discrete droplets. The droplet mean and uniformity of size of this emulsion determines the corresponding mean and uniformity of shells (synonymous with capsules) after microencapsulation. There are numerous methods in the prior art to form stable emulsions of a hydrophobic or lipophilic phase in an aqueous phase (oil in water). Any method of producing a stable, electro-optical fluid emulsion can be used with the current microencapsulation method.

Techniques to disperse the hydrophobic, electro-optical fluid in a continuous water phase (oil in water emulsion) include high-pressure homogenisation (synonymous with microfluidization), membrane, microchannel, and high-speed, mechanical stirring. The first and last techniques in particular are used in prior art electro-optical devices. Eink Holdings' US2010/0044894 compares the polydispersity of an electrophoretic ink in a water emulsion using both methods and finds that high-pressure homogenizing (referred to as microfluidization in the document) achieves the lowest polydispersity (i.e., droplets are closest to being monodisperse). Rohm and Haas Company's US 5,976,405 uses a high speed stirrer (referred to as a blender) to create a nematic liquid crystal water emulsion, and Eastman Kodak Company's US 7,119,859 uses high-pressure homogenisation to create a cholesteric liquid crystal water emulsion. As a general reference, 'Colloidal Dispersions: Suspensions, Emulsions, and Foams' by Ian D. Morrison and Sydney Ross (2002), discusses processing methods for making emulsions and for stabilizing them with steric/polymer means (e.g. non-ionic surfactants) and/or electrostatic means (e.g. anionic and cationic surfactants).

A particularly advantageous technique to set and stabilize droplet size is by way of Pickering emulsions, and two exemplars are solid-stabilized emulsions, and limited coalescence emulsions. In these techniques the electro-optical fluid, water and emulsion stabilizing components are passed through a high-pressure homogenisation stage (preferably more than once) resulting in an unstable emulsion of droplets typically less than 1 micron in diameter. These droplets coalesce and approach an asymptotic value over time, forming droplets of macroscopic scale beyond which further coalescence is prevented by nanometre-scale solid particles. Suitable nanometre particles can be a wide variety of organic or mineral powders.

In the solid-stabilized technique, the surface of such nanometre particles is made partially hydrophobic to promote adsorption at the oil-water interface. As evolution of droplet size nears completion, a dense, solid, interfacial film of nanometre particles inhibits coalescence and kinetically stabilizes an emulsion.

Limited coalescence is similar except the solid particles are not by themselves driven to the oil-water interface, instead the nanometre particles are driven to the surface of a water soluble polymer called a promoter. This promoter is surface-active and is driven to the oil-water interface from where its associated nanometre particles limit the degree of coalesce of the oil droplets. As evolution of droplet size nears completion, an interfacial film of polymer and nanometre particles inhibits coalescence and kinetically stabilizes an emulsion. Limited coalescence has a proven ability to limit the polydispersity index (PDI) of electro-optical fluid droplets in water to < 2 and so is particularly useful for stabilizing an emulsion of electro-optical fluid in water ahead of microencapsulating.

Eastman Kodak Company's US 6,556,262 discloses forming a stable emulsion of cholesteric liquid crystal in water using this technique, and Eink Holdings' US 2010/0044894 discloses forming a stable emulsion of electrophoretic ink in water using the technique.

The electro-optical, fluid emulsion may be evolved with or without some or all of the hydrophobic polymer precursors partly or completely solubilized in the electro-optical fluid. In the present specification, references to polymer precursors being partly solubilized in electro-optical fluid droplets in an aqueous emulsion means that some or all of the monomer components (of the polymer precursors) may form at a droplet's water interface due to the slight water solubility (or hydrophilic functionality) of the otherwise hydrophobic components. At an extreme, a polymer precursor liquid may encapsulate an electro-optical droplet in the continuous aqueous phase (i.e. oil in oil in water). It will also be appreciated that temperature has a significant influence on solubility - the emulsion may display only partial solubility at room temperature while at the elevated temperature, used for reacting the incorporated thermal initiator components, the polymer precursors may be fully solubilized (or vice versa).

In the present case, it is only necessary that the polymer precursors are present in the discrete droplets of electro-optical fluid prior to polymerisation. This means that:

a) some or the entire polymer precursors can be present when evolving the electro-optical emulsion; and/or

b) some or the entire polymer precursors can be added to a stable (fully evolved), electro-optical, fluid emulsion and diffuse through the aqueous phase to swell electro-optical fluid droplets.

In the latter case the polymer precursors are preferably added in the form of a fine ($\leq$ 1 micron diameter) aqueous emulsion (i.e., hydrophobic monomer solution dispersed in water). This can readily be achieved using a high-speed stirrer or preferably a high-pressure homogeniser.

The suspension polymerisation described herein uses free radical polymerization whereby polymer is formed from the successive addition of free radical building blocks. Free radical monomer units, the starting point of a building block, come from the reaction of radical initiators with monomer. Radical initiators decompose with homolysis of the weakest bond and produce free radicals when the temperature is sufficiently high.

In the present microencapsulation method, as polymerisation proceeds the following occur:

a) As polymer-network, structured fractions grow, they almost immediately become insoluble in the electro-optical fluid because of the high density of crosslinks between 'chains' (they become gel fractions as opposed to sol fractions), and due to their sufficiently hydrophilic nature the fractions are driven out of the electro-optical fluid to continue growing at the interface between an electro-optical fluid droplet and the aqueous phase.
It follows that sol fractions - polymer strands solubilized in the electro-optical fluid - are avoided by creating only polymer-network, structured fractions (and these having a high level of crosslinks) thereby ensuring only gel - insoluble polymer - is created. Solubilized polymer strands in the electro-optical fluid could impede the switching of the fluid with an electrical field, and additionally in electrophoretic devices could undermine the suspension of particles within the fluid. In the present case, the insoluble, polymer-network structured fractions are driven out of the electro-optical fluid due to the slight hydrophilic functionality of the polymer. Conversely, use of a strongly hydrophobic crosslinker such as divinyl benzene (DVB) leads to polymer-network structured fractions that remain in a liquid crystal droplet.

b) As polymer-network, structured fractions grow at the interface between the electro-optical fluid droplet and the surrounding aqueous phase they gel leading to the formation essentially of a single macroscopic molecule, and on completion of polymerisation the microencapsulation of the electro-optical fluid inside a highly-crosslinked, hydrophobic polymer shell that is transparent to specular light.
The polymer of the shell wall is formed generally of a single macroscopic molecule, and that macroscopic molecule has a high density of crosslinks and is hydrophobic as is the electro-optical fluid it encapsulates. It has been found that a uniform, high-density of crosslinks throughout a shell's polymer wall achieves wall resistance to penetration by polymer matrix precursors in a subsequent film fabrication step.

The properties of the polymer precursors - the monomers and initiators - employed in the microencapsulation method achieve the preceding characteristics. The monomer components (polymer precursors) are chosen such that:

a) The monomer solution comprises hydrophobic (and in particular, lipophilic) monomers having just sufficient water solubility (or hydrophilic functionality) to cause polymer-network fractions to be driven to the interface between the electro-optical fluid and the aqueous phase that surrounds the fluid as polymerisation proceeds. To this end, the monomer components used should have water solubility (expressed as millilitres of monomer solubilized per litre of water) within the range 0.101ml/L to 99ml/L, more preferably, 0.5ml/L to 40ml/L, and most preferably, 1ml/L to 30ml/L.
As discussed previously, divinyl benzene (DVB), although having two functional groups, would not be suitable as a crosslinker in the present case, because it is too hydrophobic, its water solubility being 0.025ml/L. In this regard, suitable crosslinking monomers having two functional groups are (the water solubility is given in brackets): ethylene glycol dimethacrylate EGDMA (2.8ml/L), diethylene glycol dimethacrylate DEGDMA (15ml/L) and triethylene glycol dimethacrylate TEGDMA (26ml/L).

Trimethylolpropane triacrylate (TMPTA) - a crosslinking monomer having three functional groups -has a suitable water solubility of 1.7ml/L.
With regard to monofunctional monomers, methyl methacrylate (MMA) has a water solubility of 17ml/L and tert-butyl methacrylate has a solubility of 0.5ml/L making both suitable, but hydroxyethyl acrylate (HEA) and hydroxyethyl methacrylate have a water solubility of > 100ml/L making them unsuitable.

If the aqueous phase has a solvent added to water then this increases the solubility of monomers in that phase and so consideration needs to be given to the choice of monomer for use with such aqueous phases to ensure that the solubility ranges given above are not exceeded.

b) In preferred embodiments of the invention, at least the majority of the crosslinking monomer has two functional groups.

Crosslinking monomers having two functional groups, for example, EGDMA, generally create linear polymer-network structures and so avoid cyclic, polymer-network fractions which can result from some crosslinking monomers having three or more functional groups and which can cause non-uniform wall thickness in a shell.

In the simplest embodiments of the present invention, just one monomer - the crosslinking monomer - is employed. However the requirement for refractive index matching of a shell's polymer to the electro-optical fluid will generally necessitate the addition of at least one monofunctional monomer.

c) The level of crosslinking monomers (i.e., monomers having two or more functional groups) relative to the overall monomer solution, taking into account its reactivity with itself and any other monomers, is at least sufficient to ensure that as polymerisation nears completion, that the available monomer is substantially the crosslinking type.

This maximizes the crosslink density of polymer in a shell by ensuring sufficient supply of crosslinking monomer up to the completion of polymerization. It also ensures that the final polymer surfaces formed (outer and inner surfaces of a shell) are highly crosslinked. In particular, it is highly desirable in the present case that crosslinks dominate a shell's outer polymer surface.

d) The level of the crosslinking monomer, and its reactivity with itself and any other monomers, is sufficient to form polymer whose sole structure is the polymer-network type (that is fully crosslinked polymer) and said polymer is a glassy, amorphous solid up to its melting temperature. That is, said polymer has no glass transition temperature, a glass transition temperature being typical of the prior art due to the dominant role of monofunctional monomers in such shells.

As previously discussed, polymer-network type structure requires the use of crosslinking monomer, the higher the level of crosslinking monomer to overall monomer (the role of monomer reactivity will be discussed below) the denser the polymer-network structure. The level of crosslinking monomers to overall monomer by weight is $\geq 25\%$, preferably $\geq 50\%$, more preferably $\geq 75\%$, and most preferably approximately 100%.

e) The level of crosslinking monomer, and its reactivity with itself and any other monomers is sufficient to ensure that the polymer is sufficiently dense with crosslinks as to be impermeable to polymer matrix precursors (wall resistance).

The prior art is silent when it comes to the chemical wall resistance of a shell. It typically relies on a hydrophilic binder (i.e. polymer matrix), as the polymer precursors of such would not be able to penetrate or partly solubilize hydrophobic polymer in a shell. But such binders or polymer matrices are susceptible to penetration (and swelling) by atmospheric moisture and so are unsuitable. Shells produced according to the present invention are resistant to hydrophobic precursors of a polymer matrix (discussed later).

f) The backbone of the crosslinking monomer spaces apart the polymer network (the crosslinks act as spacers) just sufficiently to provide flexibility in the bulk polymer (mechanical robustness).

It is important for shells to have mechanical flexibility where highly crosslinked polymers in the shells dominate, or indeed are the sole type of monomer. In the present case, at least one crosslinking monomer that itself sufficiently spaces apart the polymer-network structure is used to allow movement of chains past each other as the polymer flexes.

A crosslinking monomer can space apart polymer chains it links if the functional groups in its molecule are sufficiently spaced apart by carbon atoms or carbon and oxygen atoms. The ethylene glycol unit (i.e., a diol) in EGDMA (crosslinking monomer) sufficiently spaces apart its two functional groups to avoid brittleness in its polymer and provide good overall flexibility and mechanical robustness in the shells of the current invention. By contrast DVB, discussed earlier, polymerises to a brittle polymer having poor flexibility.

In the prior art, a low Tg (i.e. glass transition temperature) monofunctional monomer is used to enhance flexibility. But such monomer, incorporated into a shell's polymer at the interface surface with the electro-optical fluid, will have a pendant group that can be solubilized in the electro-optical fluid and this is undesirable. Furthermore, at the outer polymer surface of a shell the pendant group (of a low Tg monomer) can lead to shell entanglement when shells are recovered from the water phase and dried to a powder.

g) The functional groups in a crosslinking monomer are sufficiently spaced apart so that the reactivity of one is not unduly affected by the polymerisation of another, and the reactivities of the different monomers in the polymer precursor solution are preferably balanced to ensure uniform resultant polymer properties and the avoidance of monofunctional monomers being capable of forming sol fractions.

Taking the former point first, in certain embodiments densely-crosslinked, polymer-network structure is created from the polymerisation of a sole crosslinking monomer (i.e. there is little or no monofunctional monomer). In this case most favourably an unreacted functional group is uninhibited by the reaction of other groups in the same molecule, and most unfavourably reaction of the first functional group could completely sterically hinder reaction of a molecule's second functional group, and so no crosslinking would result despite the only monomer present being a crosslinking monomer. Equal reactivates of a molecule's functional groups maximises the likelihood of forming a crosslink. Conversely, significantly reduced reactivity in subsequent groups after a molecule's first is reacted minimizes crosslinks.

The crosslinking monomer EGDMA, which is used in certain embodiments of the present invention, and whose functional groups are spaced apart, has equal reactivities (the reaction of one functional group does not affect the reactivity of the other). By contrast DVB and allyl methacrylate are examples of crosslinkers that have significantly unequal reactivities.

The second point requires that the reactivities of the different monomers in the polymer precursor solution be balanced to ensure uniform resultant polymer properties and the avoidance of monofunctional monomers capable of forming sol fractions.

The purpose of having more than one monomer in the polymer precursor solution is to impart beneficial properties in the resultant polymer, for example, lowering or raising the refractive index of the polymer. The level of the second monomer should be sufficient so that as it is polymerised, its overall level in the unreacted monomer remains balanced and so as polymerisation proceeds the polymer properties remain uniform. For this to be achieved the reactivity of the second monomer with the first and with itself must be taken into account when determining the level within the polymer precursor solution (the prior art literature covers the appropriate equations and calculations to use).

Thus, when one or more monofunctional monomers are added to the crosslinking monomers, to avoid the possibility of a sol fraction during microencapsulation, the reactivity of a monofunctional monomer with the crosslinking monomer should not be significantly less than the monofunctional monomer's reactivity with itself. A sol fraction could arise if the molecules of monofunctional monomer were the primary repeating unit in a polymer strand. Methyl methacrylate (MMA) is an example of a monofunctional monomer that is well suited to use with the crosslinker EGDMA as the reactivities of all functional groups (double bonds of MMA and EGDMA) are equal.

h) The backbone functionality of the crosslinkers should ensure that polymer interaction with the microencapsulated electro-optical fluid is minimal.

Embodiments of the present invention employing EGDMA as the sole monomer minimize any interaction between liquid crystal molecules and the polymer at their interface. This in indicated by no increase in the operating voltage of a film prepared using microencapsulated liquid crystal when compared with a similar (referring to the thickness of the LC layer) film prepared by the PIPS method, described in PCT/EP2008/005151.

Similarly, microencapsulation of electrophoretic ink using EGDMA as the sole monomer was successful in replacing the coacervation formed capsule walls of prior art films in this respect. In cases such as this where the polymer is formed from solely crosslinking monomers, it has no pendant groups or branched polymer chains at its interface surface with an electro-optical fluid.

i) In embodiments of the invention, the monomer components are chosen from acrylate or methacrylate types. Preferably at least the majority of the crosslinking monomer has a diol unit in its backbone. Preferably at least the majority of the crosslinking monomer is chosen from: ethylene glycol dimethacrylate (EGDMA), ethylene glycol diacrylate, diethylene glycol dimethacrylate (DEGDMA), diethylene glycol diacrylate, triethylene glycol dimethacrylate (TEGDMA), triethylene glycol diacrylate, propylene glycol dimethacrylate, propylene glycol diacrylate, dipropylene glycol dimethacrylate, dipropylene glycol diacrylate, glycerol dimethacrylate, glycerol diacrylate, neopentyl glycol dimethacrylate, neopentyl glycol acrylate, neopentyl glycol propoxylate diacrylate, neopentyl glycol propoxylate dimethacrylate, butanediol dimethacrylate, butanediol diacrylate, hexanediol dimethacrylate, and hexanediol diacrylate.

Acrylate or methacrylate crosslinking monomers having two functional groups and spaced apart by at least one diol unit are effective in meeting the requirements outlined above. It is particularly advantageous to have just one diol unit, as per EGDMA, to maximize wall resistance to chemicals and yet have good flexibility.

If greater shell flexibility than EGDMA on its own can provide is required (though this already provides adequate shell flexibility for most applications) then in some embodiments, crosslinking monomers having two or three diol units (e.g. DEGDMA or TEGDMA) can be added to EGDMA to enhance the spacing within crosslinks, and thereby flexibility, while minimizing any loss in shell wall resistance (with respect to a shell formed from only EGDMA).

When using a crosslinker with a diol in its backbone, the resulting polymer lacks affinity with liquid crystal molecules (when microencapsulating liquid crystal fluid) and so excludes liquid crystal from plasticizing the polymer as it forms. Similarly, the suspending fluid in electrophoretic ink lacks affinity with a diol containing backbone. For example, Isopar M (Exxon Mobil Chemical) is a typical suspending fluid and is a C13 to C14 hydrocarbon isomer, it does not plasticize the shell wall. This avoidance of the electro-optical fluid plasticizing the polymer wall, is another reason for a shell's wall, provided by the present invention, having resistance to penetration by chemicals.

j) Monofunctional monomers can be added to crosslinking monomers to match the refractive index of the polymer of a shell to its microencapsulated electro-optical fluid.

This index matching method involves choosing a suitable crosslinker (on the basis of the preceding requirements) having a refractive index for its polymer that is close to that required to match the electro-optical fluid. Monofunctional monomer, preferably having a high Tg value (> the display device's maximum operating temperature), is then added to lower or raise the polymer's refractive index to exactly match (ideally within 0.005) the electro-optical fluid.

k) Preferably, the thermal initiators are lipophilic and soluble in the electro-optical fluid.

This ensures that monomer solubilized therein is reacted and driven to a droplet's water interface (as discussed previously) thereby avoiding unreacted monomer in microencapsulated, electro-optical fluid.

Use of more than one thermal initiator allows greater control of the rate of polymerisation (assuming different half-life temperatures) as will be familiar from the prior art.

Suitable thermal initiators include dialkyl peroxides, hydroperoxides, diacyl peroxides and azo compounds, see 'Handbook Of Free Radical Initiators' by E.T. Denisov, T.G. Denisova, and T.S. Pokidova for a comprehensive list of compounds, trade names, and supplier names.

The level of polymer precursors (monomers and initiators) required to microencapsulate an electro-optical fluid emulsion is dependent on the mean volume of the emulsion's droplets without polymer precursors solubilized therein. Preferably, sufficient polymer precursor is used to create a shell wall thickness of between 0.25 micron and 5 microns, and more preferably between 0.35 microns and 3.5 microns. Preferably, as droplets' mean volume increases so also does its shell wall thickness, though only to the extent necessary to ensure sufficient wall strength as the mean volume increases.

As a guide towards the level of polymer precursors to add, take the volume of the mean electro-optical fluid droplet from the volume of the mean targeted microencapsulated shell (droplet diameter + 2 x wall thickness) to arrive at the target volume in a shell's wall. The guided prepolymer level to add, as a percentage of the overall electro-optical fluid plus prepolymer, is given by:

$$[(\text{target, mean shell wall volume}) / (\text{target, mean shell volume})] \times 100$$

For example, if the mean droplet diameter of the electro-optical emulsion is 10 microns, then its volume is $5.24 \times 10^{-16}$. If the target wall thickness is about 0.75 micron then the target shell diameter (post microencapsulation) is 11.5 microns and its volume is $7.96 \times 10^{-16}$. The difference is the target, mean shell wall volume, $2.72 \times 10^{-16}$. The prepolymer level as a percentage of the overall (prepolymer + electro-optical fluid) needs to be about:

$$(2.72 \times 10^{-16} / 7.96 \times 10^{-16}) \times 100 = 34.2\%.$$

If the droplet mean diameter is doubled to 20 micron then the wall thickness can be doubled to 1.5 micron for the same prepolymer level:

$$(2.182 \times 10^{-15} / 6.371 \times 10^{-15}) \times 100 = 34.2\%.$$

If the droplet mean diameter is 40 micron and the shell wall thickness is 1.5 microns then the prepolymer level is 19.5%. A correction factor can readily be applied to the preceding simplified calculations to take into account the different specific gravities of the polymer and the electro-optical fluid.

The preceding paragraphs disclose how microencapsulation starts with an emulsion of electro-optical fluid and polymer precursor solution (the hydrophobic, discrete phase) in water (the continuous phase). The properties of the prepolymer solution components (i.e. how to formulate a prepolymer solution) that lead to gel fractions being driven to the interface with water and forming there into a single macroscopic molecule as polymerisation proceeds were disclosed, as was a guide to shell wall thickness post micoencapsulation.

Another aspect of the microencapsulation method of the current invention is control over the suspension polymerisation technique.

As polymerisation proceeds, and gel fractions form at the water interface, a shell's wall will experience an intermediate time during the process in which its polymer is tacky and capable of bonding with other shells that come into contact. The suspension polymerisation technique requires constant stirring at a low speed just sufficient to maintain the hydrophobic phase (the droplets that become shells as polymerisation proceeds) dispersed in the water phase and avoid sedimenting. This stirring causes collisions between shells as they form and causes shells to aggregate or become degraded if suspension control measures are not taken. The suspension polymerisation control measures suitable for use in the present microencapsulation method include:

a) surfactants and surface-active solutes;

b) nanometre particles / colloids dispersed in water; and

c) water-soluble polymerisation inhibitors.

Surfactants that can be used to control suspension polymerisation include electrostatic types - anionic or cationic - and non-ionic - steric / polymer. Electrostatic surfactants are typically added at a concentration that corresponds to $\leq$ critical micelle concentration (CMC). Anionic surfactants include: sodium lauryl sulfate, sodium dodecyl sulfate, dioctylsulfsuccinate, sodium dodecyl benzene sulfonate, sodium dodecylnaphthalene sulfate, and dialkyl benzenealkyl sulfates and sulfonates. Cationic surfactants include: dialkyl benzene alkyl ammonium chloride, alkyl trimethyl ammonium chloride, alkylbenzyl methyl ammonium chloride, alkyl benzyl dimethyl ammonium bromide, benzalkonium chloride, cetyl pyridinium bromide, alkyl trimethyl ammonium bromides, and dodecyl benzyl triethyl ammonium chloride. Nonionic surfactants are preferred. These include polyvinyl alcohol, polyvinylpyrrolidone, polyacrylic acid, methalose, methyl cellulose, ethyl cellulose, propyl cellulose, hydroxy ethyl cellulose, carboxy methyl cellulose, polyoxyethylene aliphatic ethers, polyoxyethylene alcohol ethers, polyoxyethylene sorbitan monolaurate, glyceryl esters, and ethoxylated alkyl phenols.

Any of the following water-soluble, polymeric materials in particular are useful as steric stabilizers and dispersants in the present microencapsulation method. They raise the aqueous phase viscosity and effect stabilization by forming a thin layer on the shell/droplet:

a) Polyvinyl alcohol (PVA), hydrolysis mol% 86.5 - 89.0, available from Nippon Gohsei as Gohensol GL-20; use Gohensol GL-20 at 0.5% to 3% of the water phase (w/v).

b) Polyvinylpyrrolidone (PVP), Mw 360,000, available from Sigma-Aldrich as PVP K90; use PVP K90 at 0.05% to 1% of the water phase (w/v), preferably with an anionic surfactant at $\leq$ its CMC level, for example, sodium dodecyl sulphate (available from Sigma-Aldrich).

c) (Hydroxypropyl)methyl cellulose, Mw 120,000, available as Methocel K100 from Sigma-Aldrich; use Methocel K100 at 0.05% to 0.5% of the water phase (w/v), preferably with an anionic surfactant at $\leq$ its CMC level, for example, dioctyl sulfosuccinate sodium salt (available from Sigma-Aldrich).

d) Block/graft copolymers having lipophilic anchoring groups and hydrophilic stabilizing groups including: polystyrene-co-polyethylene oxide, polyvinyl acetate-co-polyvinyl alcohol, polymethyl methacrylate-co-polyacrylic acid, polyacrylonitrile-co-polymethacrylic acid, polydimethylsiloxane-co-polyacrylamide, polyvinyl chloride-co-polyvinyl pyrrolidone, and polylauryl methacrylate-co-poly(4-vinyl pyridine)

e) Other suitable water-soluble polymers include: gelatin, starch, carboxymethyl cellulose (CMC), methylhydroxyethyl cellulose, and hydroxyethyl cellulose (HEC).

Nanometre-scale colloids (synonymous with particles) can be used to provide steric hindrance between shells either as a dispersant in the water phase or as a surface-active agent when driven to a shell's water interface. The latter case was described earlier with respect to solid-stabilized emulsions, and limited coalescence emulsions (i.e., Pickering emulsions). The nanometre-scale colloids should be insoluble in the aqueous phase and the electro-optical fluid (with polymer precursors) phase. In addition, the colloids should not be dispersible in the electro-optical fluid, and if wettable by the electro-optical fluid (e.g. hydrophobic coating) they should be more hydrophilic than lipophilic to ensure a colloid's bulk remains substantially in the water phase. Suitable colloids generally have a diameter $\leq$ 250nm, more preferably $\leq$

100nm and most preferably ≤ 50nm.

Suitable colloidal dispersions in water include silica, aluminium oxide, aluminium hydroxide, polycrystalline diamond, bentonite, kaolin, magnesium silicate, clay, and non-film-forming, hydrophilic polymers. Silica colloidal dispersions in water are available from Sigma-Aldrich as the Ludox range (a trademark of Dupont Corp.) and from Eminess Technologies Inc. as Ultra-Sol silica colloidal slurries. Aluminium Oxide dispersions in water are available from Sigma-Aldrich and from Eminess Technologies Inc. as Ultra-Sol alumina colloidal slurries. Similarly, polycrystalline diamond colloidal slurries are available from both of these suppliers. The colloidal weight in the aqueous phase is preferably 0.015% to 5% (w/v), and more preferably, 0.1% to 3%.

Polymerization inhibitors for use in the present microencapsulation method are water soluble. They slow or completely suppress free radical polymerization at a shell's interface with water (thereby minimizing tackiness of a shell's surface) while leaving polymerization unhindered in the hydrophobic phase not in intimate contact with the water phase. The inhibitor also suppresses polymerization of any monomer soluble in the water phase arising from the requirement that the monomers have a slight water solubility (thereby avoiding polymer strands attaching to a shell's surface). By suppressing these two cases the inhibitor contributes to shell surface smoothness.

Suitable polymerization inhibitors include unsubstituted hydroxyaromatic compounds such as resorcinol, hydroquinone, pyrocatechol, and pyrogallol, as well as substituted hydroxyaromatics such as hydroquinone monomethyl ether, tert-butyl pyrocatechol, p-nitrosophenol, and condensates of phenols with aldehydes. Suitable inorganic polymerization inhibitors include potassium iodide, potassium dichromate, cupric sulfate pentahydrate, sodium nitrite, hydroxylamine, and hydrazine. Resorcinol is the preferred polymerization inhibitor.

Just sufficient polymerization inhibitor is added to the water phase to achieve shell surface smoothness. Typically, based on the total amount of the water phase, this is in the range from 10 to 500 ppm, more preferably 10 to 250 ppm, and most preferably 20 to 200 ppm.

In certain embodiments of the invention, multi-layer shells are provided. In these embodiments, the resulting shell has greater wall resistance to polymer matrix precursors than using the same weight of monomer solution to form a single layer. Where all layers of a multi-layer shell use the same monomer components, this ensures uniform polymer properties in a shell's wall.

To prepare a multilayer shell treat each layer as if it were the first, that is minimize the carry-over of polymerisation control additives from one layer to the next. After encapsulating (the first layer) filter the shell suspension to remove any aggregate or large outliers. Next allow to sediment and then drain the water phase. Redisperse the sediment bed again in water and put under stirring. At this point the suspension should be largely free of the polymerisation control additives used for the encapsulation stage (removed when the water was drained). For each layer, prepare a polymer precursor emulsion in water, and prepare polymerisation control additives, and add these to the shell suspension under low speed stirring. Without delay, cure a subsequent layer.

It is thought that monomer added as part of a second layer has some capability to swell the polymer wall of a shell and while curing the second layer, this monomer reacts with unreacted sites in the polymer wall to further increase crosslink density, at least for polymer close to the outer shell surface. Advantageously, it has been found that improved chemical resistance can be obtained from shells having two layers when compared to shells having one layer. For example, 80% of the polymer precursor could be used to 'first' microencapsulate, leaving 20% to apply a second layer that enhances the crosslink density (and so chemical resistance) of a shell's outer surface.

A subsequent layer can also be used to impart functionality on the outer surface of a shell while leaving the polymer of preceding layers unaffected. For example, use of a monomer having a substituent epoxy group (e.g. glycidyl methacrylate) would allow such groups to be reacted as part of curing the polymer matrix thereby crosslinking a shell's polymer wall with the polymer matrix.

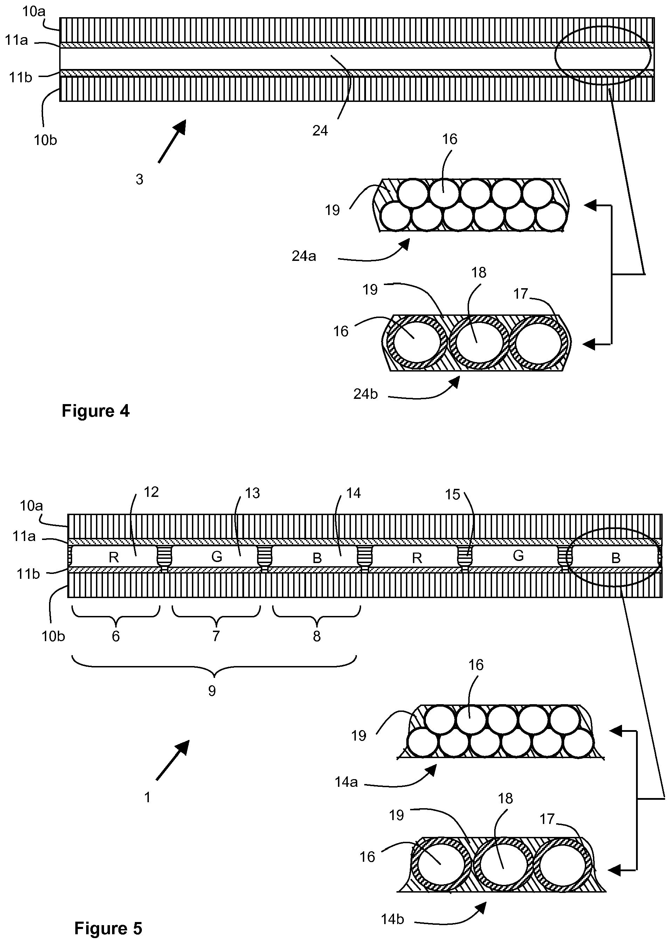

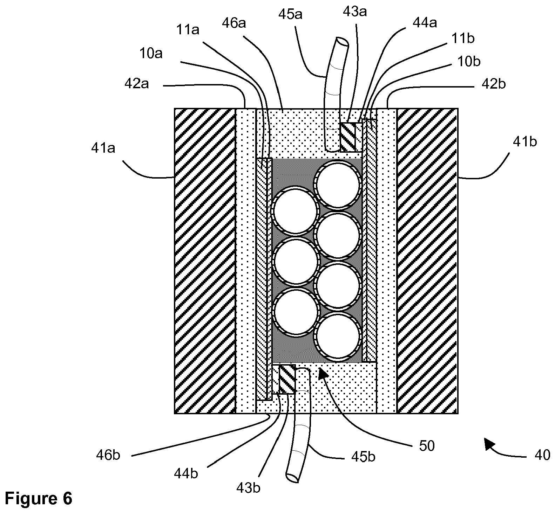

Figure 4 shows a cross section of display device 3 including microencapsulated electro-optical fluid droplets produced according to the present invention. Hydrophobic, electro-optical shells 16 (which can be either of the types 4 or 5 as shown in figures 1 and 2) are dispersed in hydrophobic, polymer matrix 19 to form an optically active layer 24. Shells 16 may be a monolayer, 24b, or a stacked layer, 24a. Electrodes 11a and 11b are made from indium tin oxide (ITO) or other suitable optically-clear, conductive material. One or both electrodes can be patterned to create a segmented display device or a matrix of pixels (i.e., picture elements), or alternatively, neither electrode is patterned in switchable film applications an example of which is shown in figure 6. Advantageously, one or both substrates 10a and 10b are a transparent, flexible plastic film such as polyethylene terephthalate (PET) or polycarbonate (PC), however substrates 10a and 10b can also be a rigid material such as glass.

When an electrical field is applied between electrode 11a and the counter electrode 11b (in figure 4) the area of layer 24 overlapped by both changes optical states depending on the signal applied (electrical connections and signal generator are not shown). For example, the overlapped area of layer 24 may switch from black to white or to a grey state when layer 24 comprises electrophoretic ink shells (i.e., of the type shown in figure 2). If layer 24 comprises cholesteric liquid crystal shells then on switching layer 24 it would alternate between an optically transparent on state (i.e., see-through) and a translucent off state.

In active matrix applications one of the substrates may be glass and the active matrix transistors and pixel electrodes would be formed on the glass (though the active matrix transistors and pixel electrodes may also be formed on a plastic film). In addition, electrode 11a (the continuous electrode) is overlaid with a black mask or matrix (not shown in the figures but typically an organic material with carbon black particles) that hides the dead region between the electrodes of pixels, as will be known from the prior art. Furthermore, colour display devices may be realised by overlaying device 3 with a colour filter (RGB or Pentile matrix types for example) and dividing pixels into addressable subpixel regions, these and other details will be familiar from the prior art.

In summary, display device 3 in figure 4 depicts a general display device made with microencapsulated electro-optical fluid droplets produced according to the present invention and includes the following types: a segmented display, an active-matrix, monochrome display, an active-matrix, colour display using a colour filter, and a switchable film for use in smart window applications.

Figure 5 shows a colour display device where the optically active layer is itself coloured and eliminates the separate colour filter of prior art colour devices. Rather than being a continuous layer as in figure 4, the optically active layer is divided into discrete regions corresponding to colour: for example, red, green and blue regions.

Blue region 14 is shown in greater detail as 14a and 14 b. It comprises hydrophobic capsules or shells 16 that can be either type 4 (figure 1) or type 5 (figure 2) dispersed in a hydrophobic polymer matrix or binder 19. The capsules or shells have a thin outer hydrophobic polymer wall 17 that completely encloses, that is encapsulates, blue-colour-creating, hydrophobic, electro-optical fluid 18. Depending on the ratio of the average shell diameter to the print thickness, and the relative volume occupied by shells in a print, the shells may be stacked, 14a, or be a monolayer, 14b. Details of one method to produce the device of Figure 5 are provided below.

Electro-optical fluid 18 may be any known type capable of transmitting, reflecting, or absorbing selective visible light wavelengths to create coloured light. For example, electro-optical fluid 18 may be an electrophoretic ink comprising at least one colour (other than black or white) of suspended particles, or the suspending fluid itself may provide the colour. Electro-optical fluid 18 may be a liquid crystal fluid having incorporated therein dichroic dye and be one of the types nematic, cholesteric or smectic. In addition, electro-optical fluid 18 may be cholesteric liquid crystal tuned to Bragg reflect a band of visible light.

Figure 6 shows a glazing structure 40 comprising liquid crystal (LC) film 50 laminated between glass panes 41a and 41b. Film 50 is similar to device 3 in figure 4 and in this case the electro-optical fluid is cholesteric liquid crystal. On opposing sides, connection ledges are prepared: copper or other highly conductive flexible material, 43a and 43b, is bonded to ITO surfaces 11a and 11b respectively via conductive adhesive and / or conductive ink 44a and 44b; polarized driving signals can be applied to the LC film 50 via bonded / soldered cables 45a and 45b respectively.

The LC film 50 can be laminated to a regular window glass pane on one or both sides by employing an adhesive sheet known as an interlayer. In figure 6, the LC film 50 is laminated on both sides to glass panes 41a and 41b via interlayers 42a and 42b respectively. The interlayer can be polyvinyl butyral PVB, ethylene-vinyl acetate EVA or polyurethane PU, and advantageously incorporates a UV blocking function. Preferably, an EVA interlayer is used as these have the lowest maximum processing temperature. A vacuum-bag glass laminating process is preferred over an autoclave. Suitable interlayer films for use with the present invention include EVASAFE from Bridgestone Corporation, Japan, and SLEC from Sekisui, Japan. Process guidelines for laminating PET films (i.e., the preferred substrate material of the present invention) to glass are available from both suppliers. The resultant glass laminates made with LC film including microencapsulated electro-optical fluid droplets produced according to the present invention can be free of discernable glass laminating related defects, and do not suffer any objectionable optical degradation as a consequence of glass lamination, and possess suitable robustness in all window sizes.

Turning next to the preparation of an electro-optical ink, that is shells 16 prepared as previously described and dispersed in hydrophobic, polymer matrix precursors. This electro-optical ink (or suspension) is coated onto a substrate and cured to form optically-active layer 24 in figure 4 or optically-active regions 12, 13 and 14 in figure 5 for example.

Having microencapsulated an electro-optical fluid emulsion as described, the shells can be recovered simply by stopping mechanical stirring and allowing the shells to sediment. Prior to allowing to sediment, the suspension can be sieved in a stainless steel mesh having a pore size of two times or more the shell mean diameter (by volume) to remove any large outliers or aggregate. Further classification of shell size requires further sieving stages. The sieved suspension is allowed to sediment and then the aqueous phase drained to leave a wet shell bed. The bed can be air dried to remove residual water (or evaporated in a vacuum) and to recover shells as a fine shell powder.

The densely-crosslinked, polymer-network structure of the shells avoids the polymer surface of neighbouring shells becoming entangled as they have no pendant groups or branched chains to cause entanglement allowing shells to be recovered as a fine powder (i.e., not aggregated).

This contrasts with prior art methods, where shells that were discrete in their suspension become aggregated when recovered as a powder due to entanglement of their polymer surfaces and can require a grinding / milling step to undo such entanglement.

Prior to air-drying the sedimented shell bed, the shells can be washed to remove any residuals from the microencapsulation stage such as surfactants. The washing stage can use water, or an alcohol such as methanol, or an acetate, or any solvent that is effective.

The chemical resistance of the shells of the present invention permits such a wash cycle, and in particular permits the use of a methanol wash cycle.

It will be appreciated that the shell powder preserves the isolation of electro-optical fluid (a liquid) inside the solid form of its shells. This permits the mixing of different shell powders, even different electro-optical fluid technologies. For example, shell powders having different mean diameters could be mixed, or liquid crystal shells and dichroic, liquid crystal shells could be mixed, or liquid crystal shell powders having different liquid crystal birefringence could be mixed, or black and white electrophoretic ink shell powder could be mixed with coloured shell powder (i.e., at least one colour other than black or white).

Preferably the polymer matrix (synonymous with binder) precursors are hydrophobic and its monomers, oligomers, or low molecular weight polymers are acrylates, methacrylates or vinyls. The polymer formed by these generally has good to very good UV stability compared to other polymers, particularly those that are strongly hydrophobic, though other hydrophobic polymers may also be used. Suitable acrylates and methacrylates have a variety of substituent functional groups (synonymous with pendant groups) that can be classified as linear alkyl, branched alkyl, aryl, alkylaryl, arylakyl, multiple arylalkyl, alkylmultiplearyl, alkylcycloalkyl, cycloalkylalkyl, hydroxyalkyl, fluoroalkyl, fluoroaryl, alkylsiloxane, siloxanealkyl, siloxanearyl, and arylsiloxane groups. In particular embodiments, the polymer matrix precursors use strongly hydrophobic monomers and oligomers to ensure atmospheric moisture is prevented from entering the electro-optical layer, and to seal an active matrix substrate's transistors and electrodes if these are part of the display device.

In particular embodiments, the polymer matrix precursor solution comprises:

a) At least one lipophilic, monofunctional monomer or oligomer having a low Tg value (preferably < 0°C) to provide flexibility, and to lower the refractive index of the polymer matrix if necessary to index match (preferably within 0.005) a shell's wall and / or the electro-optical fluid;

b) At least one lipophilic, monofunctional monomer having an aryl substituent functional group to increase the refractive index of the polymer matrix if necessary to index match (preferably within 0.005) a shell's wall and / or the electro-optical fluid, and to promote adhesion to ITO electrodes;

c) A lipophilic, crosslinking monomer to add strength to the polymer matrix;

d) Lipophilic photoinitiators, to facilitate the rapid curing of the polymer matrix by free-radical polymerisation means. For example, benzoin methyl ether BME (available from Sigma Aldrich), or 2,2-dimethoxy-1,2-diphenylethan-1-one known as Irgacure 651 (available form Ciba Speciality Chemicals), or any other photoinitiators from the Irgacure family such as 184, 819, 907 and D1173. Combing synergistic initiators such as an acylphosphineoxid class with an $\alpha$-hydroxyketone (e.g. Irgacure 819 and Irgacure 184) is favoured. Also suitable are class II photoinitiators such as benzophenones (e.g. Esacure TZT from Lamberti Spa) or thioxanthone (e.g. Esacure ITX from Lamberti Spa) and associated amine co-initiators such as ethyl 4-dimethylamino benzoate or 2-ethylhexyl-4-dimethylamino benzoate.

It is observed that photoinitiator blends that combine different chemistries - class I and class II - are particularly suitable if the electro-optical ink is the electrophoretic type or a dichroic liquid crystal type. An acylphosphineoxid such as Irgacure 819, an $\alpha$-hydroxyketone such as D1173 and a benzophenone such as Esacure TZT (2,4,6-trimethylbenzophenone + 4-methylbenzophenone) achieve very good through curing in an optically-active layer 24 from 10 to 100 micron in thickness.

Preferably the photoinitiator blend is added at the rate of 1 - 12% by weight of the monomers (i.e., including crosslinker and monofunctional monomer), and more preferably at 3 to 8%.

e) Coating agents such as wetting agents, dispersants, surface tension modifiers, or agents that modify thixotropic behaviour.

Wetting agents adjust the interfacial tension at the coating/substrate interface and include, for example, anionic and cationic surfactants, and nonionic surfactants. Dispersants provide control over shell settling.

Surface tension modifiers may be added to adjust the air/ink interfacial tension. Polysiloxanes are typically used in such an application to improve surface leveling while minimizing other defects within the coating. Surface tension modifiers include, for example, fluorinated surfactants, such as, for example, the ZONYL series from DuPont, the FLUORAD series from 3M (St. Paul, Minn.), and the fluoroalkyl series from Autochem; siloxanes, such as, for example, SILWET from Union Carbide; and polyethoxy and polypropoxy alcohols.

f) For added UV protection, lipophilic UV absorbers may be added such as benzotriazole, and hydroxyphenyl triazine compounds. For example, Tinuvin 479 from Ciba Speciality Chemicals may be added at 0.5% to 2% of the overall prepolymer solution.

The electro-optical inks described above are solvent-free and permit rapid curing by ultra-violet light only, or visible light only, or even a combination of both.

It has been found that shells whose polymer wall is poly(EGDMA) have very good chemical resistance to low Tg aliphatic monomers, crosslinking monomers, and aryl monomers. The low Tg monomers due to their stretched out substituent group, crosslinking monomers due to their high molecular weight, and aryl monomers due to the lack of affinity between an aryl substituent group and the diol in P(EGDMA)'s backbone.

Shell powder and fully solubilized polymer matrix precursor solution are weighted and then mixed. From geometry, the maximum loading by volume of monodisperse, spherical shells in the monolayer of 24b in figure 4 is 58% (shells touching each other), in a perfectly stacked layer it is 74% and in a randomly stacked layer it is 64%. These are the upper limits achievable with a solvent-free ink assuming the specific gravities of the different phases (electro-optical fluid, shell wall, polymer matrix) are about equal.

In practice, the usable upper viscosity of the solvent-free, electro-optical ink will be the limiting factor on the loading of shell powder. It must be possible to coat or print the ink with known methods. Adding a solvent that is evaporated after coating or printing the ink can circumvent this viscosity limit, however it is environmentally favourable to avoid use of such a solvent. It is advantageous to keep the viscosity of the polymer-matrix, precursor solution low as this maximizes the shell loading for a given ink viscosity. In this regard use of monomers instead of oligomers is preferable. Screen printing is a particularly attractive coating method for the solvent-free, electro-optical ink of the current invention due to its ability to produce thick layers (10 micron to 100 micron) from paste-like materials and on an industrial scale. Suitable ink viscosity for screen printing ranges from 1,000 to 50,000 centipoise (cP), preferably the electro-optical ink's viscosity is from 3,500cP to 25,000cP, and most preferably from 5,000cP to 15,000cP. Suitable screen printers for printing the electro-optical ink of the present invention include those available from DEK International GmbH such as the Horizon, Europa or Galaxy. The screen printer stencil or screen is preferably stainless steel but can also be polyester.

The percentage shell loading by weight in the solvent-free, electro-optical ink of the current invention is from 30% to 65%, more preferably from 40% to 60%, and most preferably from 50% to 55%. In preparing the ink for printing the shell powder can be allowed to become fully wetted by the solution over time (i.e., left stand until ready), or in some cases mechanical agitation is used to disperse the powder as discrete shells suspended in the polymer precursor solution. Suitable mechanical agitation includes stirring, shaking/shock, or sonifying at low power. The fact that a shell suspension can be sonified is a further demonstration of the mechanical robustness of the shells of the present invention.

Screen-printing trials show that the shells of the present invention posses sufficient mechanical strength to be fully compatible with high speed printing on a screen printer. The level of shells affected was negligible (<0.1%).

It is advantageous to screen-print device 3 (of figure 4) as a continuous roll, or to print optically active layer 24 as a continuous roll, to minimize costs and maximise ease of use (e.g. film can be cut from a continuous roll as required). Rotary screen printing is a seamless, continuous, coating operation and provides an alternative to the sheet printing approach of flat screen-printers. Both flat screen-printing and rotary screen printing use a stencil (cylindrical for the latter) and a squeegee, and the electro-optical ink of the current invention, optimized for screen-printing, can be used with either method.

The densely-crosslinked, polymer-network structure of a shell's wall ensures that shells retain their spherical shape in the printed layer. The polymer-matrix precursor solution does not penetrate or plasticize shells and so shell shape is unaffected by curing, unlike the prior art where evaporation of the solvent in the binder causes shells to deform and become polyhedral.

Oxygen-inhibition must be countered when photocuring the wet, electro-optical, coated layer 24 (e.g. after screen-printing) and the prior art provides several solutions. Covering the wet layer with a nitrogen blanket (i.e. nitrogen rich atmosphere) while curing is a preferred solution.

The cured electro-optical layer 24 has its top substrate applied by laminating a film substrate to layer 24 with an adhesive solution, for example the polymer-matrix, precursor solution, and photo curing. Alternatively, layer 24 may be sufficiently tacky to allow the top film substrate to be laminated without an adhesive solution. In a further demonstration of the mechanical robustness of the shells of the present invention, the shells are unaffected by this laminating stage.

Trials show that the cured electro-optical layer 24 in a display device 3 having PET substrates can be bent about a diameter of 3 cms without delamination of the layer or rupture of the shells. Indeed, depending on the polymer matrix formulation (i.e. flexibility of the polymer matrix 19), the display device 3 could be bent about a 1 cms diameter without issue.

In summary, the steps to make display device 3 (shown in figure 4) can be:

1. Prepare the emulsion: form a stable, aqueous emulsion of electro-optical fluid and polymer precursor solution.

2. Microencapsulate: thermally cure by free-radical polymerisation.

3. Recover fine shell powder: filter, allow to sediment, drain the aqueous solvent, wash, and air/vacuum dry.

4. Prepare the electro-optical ink: mix polymer-matrix, precursor solution with shell powder until shells are discretely and uniformly dispersed in a paste-like ink.

5. Coat the electro-optical ink: screen-print the ink onto the first substrate.

6. Complete the display device: cure the wet coat, laminate a top substrate onto it, and cure the polymer matrix to completion.

Example 1 (densely-crosslinked microencapsulation, single monomer, cholesteric liquid crystal)

A stable, cholesteric liquid crystal emulsion in deionised water was prepared using a limited coalescence method. A blade stirrer held the emulsion under constant stirring at 100 rpm. The liquid crystal phase had 9.66g of MLC2058, 0.11g of ZLI4571 and 0.22g of S811, all sourced from Merck (Japan). The deionised water phase was 190 ml. The stable liquid crystal emulsion was measured using a Horiba LA920 (Japan). The liquid crystal droplet mean was 8.5 microns, the standard deviation (SD) was 1.15 microns and the coefficient of variation (SD/mean x 100) was 13.5%.

Prepared a monomer solution of 1.8g of EGDMA monomer and 0.0844g of thermal initiator Luperox 531M80 (both sourced from Sigma Aldrich). Solubilized the initiator in the monomer using a sonifier. Added the monomer solution to deionised water and passed it through a homogenizer at 6,000 PSI (APV 1,000 from SPX Corp.). The resulting monomer emulsion had a volume of 150ml and was added to 100ml (i.e., half) of the liquid crystal emulsion. Thirty minutes later 6g of polyvinyl Mowiol 4-88 (sourced from Sigma Aldrich) was added to the monomer swelled liquid crystal emulsion. Stirring was maintained at 100 rpm.

Put the monomer-swelled, liquid crystal emulsion into a pressure vessel at 82 degrees Celsius and at atmospheric pressure. Allowed the emulsion to stabilize for thirty minutes then increased the pressure vessel temperature to 99 degrees Celsius to begin polymerization. Left to polymerize for four hours. Stirring was maintained at 100 rpm throughout. Removed the suspension from the pressure vessel and allowed to cool to room temperature.

Filtered the suspension through a 17.5 microns mesh to remove any aggregate or large outliers. The trapped material was negligible (< 3% by dry weight). Allowed the filtered suspension to sediment by turning off stirring and leaving overnight. Drained the water phase to remove residuals from the polymerisation stage. A wash stage followed, consisting of redispersing the shell sediment in 100ml of deionised water, allowing to sediment, and draining the water once again. The suspension was sampled during the wash stage and measured: the shell mean was 8.92 microns, the standard deviation was 1.24 microns, and the coefficient of variation was 13.9%. The washed, shell sediment was dried in air. The sediment broke down to a powder on tapping its glass container. The shell powder was then vacuumed to remove any residual moisture. Following the vacuum stage the resulting shell powder was fine. The powder was sampled and placed on a microscope slide. When viewed under a microscope, shells appeared discrete with no apparent shell aggregate. The surface of about 98% of shells appeared smooth and spherical and the liquid crystal texture was clear and uninterrupted. Copending European application entitled "Chiral Nematic, Liquid Crystal Display Device" (Attorney Ref: P103657ep00) describes the novel cholesteric liquid crystal texture obtained. Significantly, if polymer sol fractions or gel fractions were present in the liquid crystal volume, then the obtained texture would be interrupted by such fractions, this was not the case.

To evaluate the chemical resistance of shells the following tests were conducted. A slide having shell powder was submerged in methanol for 60 minutes, then removed and dried in air. Under the microscope 97% of shells showed no signs of being affected. Prepared another slide and submerged it in phenylethyl acrylate monomer for 12 hours. Evaporated the monomer under vacuum: 93% of shells showed no signs of being affected (they appeared the same under the microscope as before the test).

Used a differential scanning calorimeter (DSC-7 from Perkin Elmer) to confirm the absence of a glass transition temperature in the polymer wall of shell samples. The calculated refractive index of the polymer in a shell wall is 1.503. The ordinary refractive index of the microencapsulated liquid crystal (MLC2058) is 1.502.

The result of example 1 is hydrophobic electro-optical fluid (cholesteric/chiral nematic liquid crystal) in the form of a fine powder and comprising spherical shells that microencapsulate discrete volumes of the electro-optical fluid with a densely-crosslinked polymer wall structure. The shells have good chemical resistance to methanol and phenylethyl acrylate, and a shell's polymer wall is a good index match to the ordinary refractive index of the liquid crystal.

Example 2 (densely-crosslinked, second layer on shells)

The second half of the liquid crystal emulsion from example 1 was used to repeat the microencapsulation described in example 1 ahead of forming a second layer on shells as will be described now.

Removed the suspension from the pressure vessel after the microencapsulation stage was complete. Allowed to cool to room temperature then filtered the suspension through a 17.5 microns mesh to remove any aggregate or large outliers. The trapped material was negligible (< 3% by dry weight). Allowed the filtered suspension to sediment by turning off stirring and leaving overnight. Drained the water phase to remove residuals from the polymerisation stage. Redispersed the shell sediment in 100ml of deionised water and put under stirring at 100 rpm.

Prepared a monomer solution of 0.49g of EGDMA monomer and 0.0092g of thermal initiator Luperox 531M80. Solubilized the initiator in the monomer using a sonifier. Added the monomer solution to deionised water and passed it through a homogenizer at 6,000 PSI. The resulting monomer emulsion had a volume of 150ml and was added to the liquid crystal suspension (see previous paragraph). Next, 6g of polyvinyl Mowiol 4-88 was added to the liquid crystal suspension.

Without delay, put the liquid crystal suspension into a pressure vessel at 99 degrees Celsius and at atmospheric pressure. Left to polymerize for four hours. Stirring was maintained at 100 rpm throughout. Removed the suspension from the pressure vessel and allowed it to cool to room temperature.

Filtered the suspension through a 17.5 microns mesh to remove any aggregate or large outliers. The trapped material was negligible (< 1 % by dry weight). Allowed the filtered suspension to sediment by turning off stirring and leaving overnight. Drained the water phase to remove residuals from the polymerisation stage. A wash stage followed consisting of redispersing the shell sediment in 100ml of deionised water, allowing to sediment, and draining the water once again. The suspension was sampled during the wash stage and measured: the shell mean was 9.48 microns, the standard deviation was 1.19 microns, and the coefficient of variation was 12.6%. The washed, shell sediment was dried in air. The sediment broke down to a powder on tapping its glass container. The shell powder was then vacuumed to remove any residual moisture. Following the vacuum stage the resulting shell powder was fine. The powder was sampled and placed on a microscope slide. When viewed under a microscope shells appeared discrete with no apparent shell aggregate. The surface of about 98% of shells appeared smooth and spherical and the liquid crystal texture was clear and uninterrupted.

To evaluate the chemical resistance of shells the following tests were conducted. A slide having shell powder was submerged in methanol for 60 minutes, then removed and dried the slide. Under the microscope 98% of shells showed no signs of being affected and appeared smooth and spherical and the liquid crystal texture was clear and uninterrupted. Prepared another slide and submerged it in phenylethyl acrylate monomer for 12 hours. Evaporated the monomer under vacuum: 97% of shells showed no signs of being affected by the monomer (they appeared the same as before the test).

The result of example 2 is hydrophobic electro-optical fluid (cholesteric/chiral nematic liquid crystal) in the form of a fine powder and comprising spherical shells that microencapsulate discrete volumes of the electro-optical fluid with a densely-crosslinked polymer wall structure. The shells were formed in two discrete stages that corresponded to a microencapsulation stage and a second-layer stage. The polymer of the second stage matched that of the first and is thought to have interpenetrated the first to a degree. The resulting shells have very good chemical resistance to methanol and phenylethyl acrylate.

Example 3 (solvent-free, electro-optical ink)

Prepared an electro-optical ink using the shell powder from example 2. The ink's hydrophobic solution was made up using 0.281g of trimethylolpropane trimethacrylate, 1.823g of 2-phenylethyl acrylate, 1.742g of tert-butyl methacrylate, and 0.154g of photoinitiator Irgacure IRG651, all were sourced from Sigma-Aldrich. The solution was heated to 60 degrees Celsius, sonified to ensure all components were solubilized, and then cooled to room temperature (20 degrees Celsius). Added 3g of example 2's shell powder to 3g of the solution and allowed the shells to be wetted by the solution. Sonified the electro-optical ink at low power to disperse the shells in the continuous phase and achieve a uniform, paste-like consistency. The resulting electro-optical ink comprises hydrophobic liquid crystal inside hydrophobic polymer shells and dispersed in a hydrophobic monomer solution. The ink can be cured by ultra-violet light and is solvent-free.

Example 4 (cholesteric, liquid crystal, display device)

Screen-printed example 3's electro-optical ink onto ITO coated PET film (OC70 from CPfilms Inc.). Used a DEK 265GSX fitted with a stainless steel 230 mesh, a polyurethane squeegee, and a flood bar. The resulting wet print had acceptable flatness and was free of shell void areas in the printed area. Viewing the wet print under the microscope confirmed that shells remained free of apparent defects with no evidence of damage to shells as a consequence of printing. The liquid crystal texture inside shells was clear and uninterrupted.

Cured the print in a nitrogen-flooded chamber at 10mWatts per cms$^2$ of ultra-violet (365nm peak wavelength) for 5 minutes. Laminated a covering OC70 substrate to the cured print using ink solution from example 3. Cured the resulting liquid crystal film with ultra-violet light for an additional 5 minutes. Trimmed the liquid crystal film and applied a copper buzzbar connection to the ITO electrode on each substrate.

Applied 200VAC square wave to the film. Its powered state is transparent and haze-free confirming that the refractive index match of polymer matrix, shell wall polymer and ordinary index of the liquid crystal are a match. In the unpowered state the film is translucent. The film can be bent around a bar of diameter 2cms without apparent issue. Even when in the powered state there is no evidence that flexing/bending alters this state. Under the microscope the shells in the film retain their spherical shape, there is no evidence that curing the printed ink has affected the shells.

Example 5 (densely-crosslinked microencapsulation, 3 x monomers, nematic liquid crystal)

Similar to example 1 a stable, liquid crystal emulsion was prepared except with 10g of nematic liquid crystal MLC2058 (no added chiral dopant). The liquid crystal droplet mean was 9.25 microns, the standard deviation (SD) was 1.07 microns and the coefficient of variation was 11.6%. Prepared a monomer solution of 0.1848g of TMPTA, 0.7384g of EGDMA monomer, 1.4768g of MMA monomer and 0.08775g of thermal initiator Luperox 531M80 (all sourced from Sigma Aldrich). Solubilized the initiator in the monomers using a sonifier. Added the monomer solution to deionised water and passed it through a homogenizer at 6,000 PSI. The resulting monomer emulsion had a volume of 150ml and was added to 100ml (i.e., half) of the liquid crystal emulsion. Thirty minutes later 6g of polyvinyl Mowiol 4-88 was added to the monomer swelled liquid crystal emulsion. Stirring was maintained at 100 rpm.

Put the monomer-swelled, liquid crystal emulsion into a pressure vessel at 82 degrees Celsius and at atmospheric pressure. Allowed the emulsion to stabilize for thirty minutes then increased the pressure vessel temperature to 99 degrees Celsius to begin polymerization. Left to polymerize for four hours. Stirring was maintained at 100 rpm throughout. Removed the suspension from the pressure vessel and allowed to cool to room temperature.

Filtered the suspension through a 17.5 microns mesh, the trapped material was negligible. Allowed the filtered suspension to sediment and then drained the water phase. A water wash stage followed (as per example 1). The suspension was sampled during the wash stage: the shell mean was 9.33 microns, the standard deviation was 1.01 microns, and the coefficient of variation was 10.8%. The average wall thickness of a shell was 0.75 micron (microscope measurement).

Recovered the shell powder as per example 1. When viewed under a microscope shells appeared discrete with no apparent shell aggregate. The surface of about 99% of shells appeared smooth and spherical. Figure 3 shows a micrograph of the shells.

To evaluate the chemical resistance of shells the following tests were conducted. A slide having shell powder was submerged in methanol for 60 minutes, then removed and dried in air. Under the microscope 98% of shells showed no signs of being affected. Prepared another slide and submerged it in phenylethyl acrylate monomer for 12 hours. Evaporated the monomer under vacuum: 98% of shells showed no signs of being affected.

Used a differential scanning calorimeter (DSC-7 from Perkin Elmer) to confirm the absence of a glass transition temperature in the polymer wall of shell samples. The calculated refractive index of the polymer in a shell wall is 1.495.

The result of example 5 is nematic liquid crystal in the form of a fine powder that comprises spherical shells. Each shell microencapsulates a discrete volume of the liquid crystal fluid with a densely-crosslinked polymer wall. The shells' polymer was formed from a monofunctional monomer (MMA), and two crosslinking monomers - EGDMA and TMPTA. Shells have good chemical resistance to methanol and phenylethyl acrylate, and are an acceptable index match to the ordinary refractive index of the nematic liquid crystal.

Example 6 (nematic, liquid crystal, display device)

Prepared an electro-optical ink using the shell powder from example 5 and following the description in example 3. Screen-printed the electro-optical ink onto ITO coated PET film. Assembled a liquid crystal device as per example 4.

Applied 200VAC square wave to the film. Its powered state is transparent and haze-free. The film can be bent around a bar of diameter 2cms without apparent issue. There is no evidence that flexing/bending alters the powered state. Under the microscope the shells in the film retain their spherical shape.

As indicated above, Figure 5 shows a cross section of device 1 microencapsulated and screen-printed in accordance with a second aspect of the present invention. Pixel 9 comprises subpixel regions 6, 7 and 8. These in turn comprise coloured, microencapsulated and screen-printed, electro-optical prints 12 (Red), 13 (Green) and 14 (Blue). The subpixel electrodes 11b on substrate 10b define the subpixel boundaries and are made from Indium Tin Oxide (ITO) or other suitable optically-clear, conductive material. The x-axis and y-axis of a subpixel's electrode 11b range from 100 micron to 200 micron, and will be familiar from the prior art.

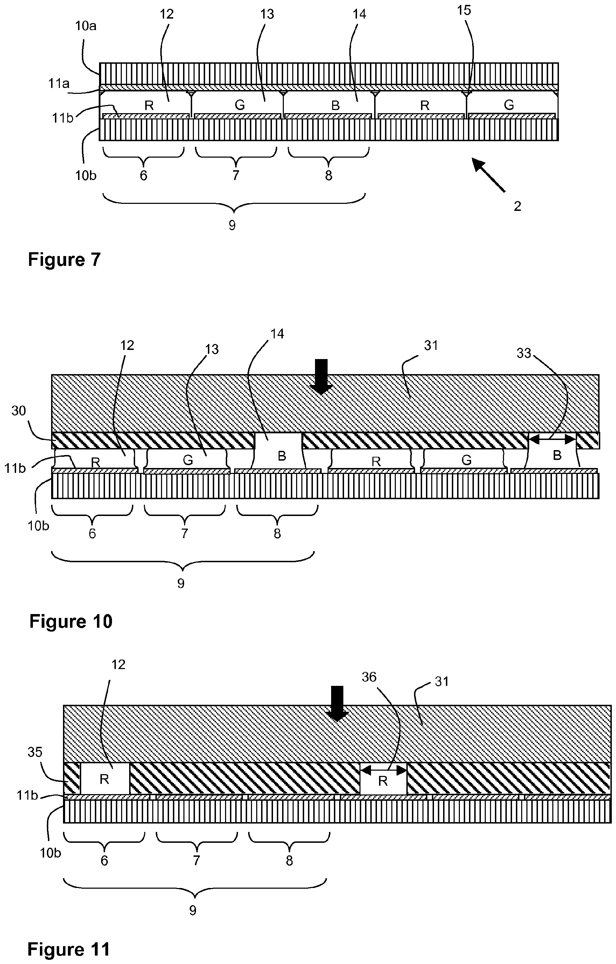

In figure 5 the subpixel prints 12, 13 and 14 do not extend beyond their subpixel boundaries on their respective electrodes on 11b, and do not come into contact with one another. An optically clear polymer 15 fills the void space between subpixels as well as being the adhesive that bonds the top substrate 10a to the printed subpixels on substrate 10b. Preferably the void space between subpixel prints is kept to a minimum, more preferably there is minimal void space as shown for device 2 in figure 7. Here the prints 12, 13 and 14 are allowed to abut one another (where contiguous) either for part of their shared boundary or continuously along the boundary.

Stimulus provided by an electrical field and applied between a subpixels electrode 11b and the counter electrode 11a cause a subpixel's print to change optical states such as from dark coloured to brightly coloured or brightly to dark or any state in between as required. An active matrix transistor, formed on part of a subpixel's electrode area, addresses a subpixel's electrode 11b, these are not shown in the figures. In addition, electrode 11a (the continuous electrode) is overlaid with a black mask or matrix (not shown in the figures but typically an organic material with carbon black particles) that hides the dead region between the electrodes of subpixels, as will be familiar from the prior art, and advantageously the black matrix can also be used to hide the void space between subpixels' prints.

The height of the print plus the height of adhesive polymer 15 is referred to as the electro-optical layer thickness or cell-gap of the display device, and is typically 5 to 20 microns for a liquid crystal device and 20 to 70 microns for an electrophoretic ink device. Blue print 14 comprises capsules or shells 16 dispersed in a polymer matrix or binder 19. The capsules or shells have a thin outer polymer wall 17 (from 100nm to 5 micron depending on the technique of microencapsulation and the shell diameter) that completely encloses, that is encapsulates, blue-colour-creating, electro-optical fluid 18. Depending on the ratio of the average shell diameter to the print thickness, and the relative volume occupied by shells in a print, the shells may be stacked, 14a, or be a monolayer, 14b. Shells 16 may be polyhedrons or spheres. Preferably the refractive index of the electro-optical fluid 18 is index matched to the polymer 17 of its shell 16, and this in turn is index matched to the polymer matrix 19 and the polymer 15. Preferably the index match is $\leq 0.005$. While polymer 15 can be any suitable optically clear adhesive, preferably it is the same polymer type as the polymer matrix 19, and more preferably it is the same formulation.

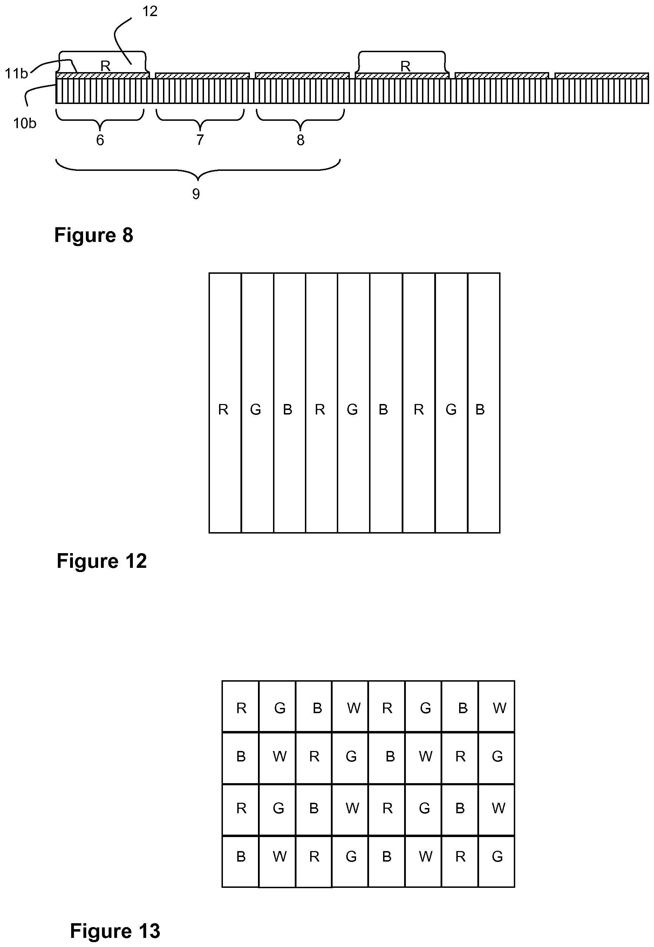

Figure 12 shows a plan view of a coloured display device having coloured subpixels screen printed in an RGB (stripe) matrix and mirrors the layout of the corresponding RGB (stripe) colour filter. Figure 13 shows a plan view of a coloured display device having coloured subpixels screen printed in a Pentile RGBW matrix (trademark of Samsung) and mirrors the layout of the corresponding Pentile RGBW colour filter. Both layouts assume additive colour mixing; subtractive colour mixing is also suitable based on cyan, magenta and yellow.

Electro-optical fluid 18 may be any known type of electrophoretic ink or liquid crystal capable of transmitting, reflecting, or absorbing selective visible light wavelengths to create coloured light. In particular, electro- optical fluid 18 can be an electrophoretic fluid comprising at least one colour (other than black or white) of suspended particles, or the fluid itself can provide the colour. Exemplary fluids, and coloured particles for suspending in the fluids are described in Eink Holdings' US 7,109,968 or Xerox's US 7,417,787. Electro-optical fluid 18 can be a liquid crystal fluid having incorporated therein dichroic dye and be one of the types nematic, cholesteric or smectic. Furthermore, electro-optical fluid 18 can be a cholesteric liquid crystal tuned to Bragg reflect a band of visible light.

In accordance with embodiments of the second aspect, the electro-optical fluid is microencapsulated so as to preserve its fluid nature inside a solid form - discrete, sealed spherical volumes inside a polymer wall or skin - before being screen printed onto a substrate and used in a colour device. The known methods for microencapsulation can be divided into two types:

a) The hydrophilic shell type: the bulk polymer in a shell has a dominant hydrophilic nature. Generally the prior art methods require the majority by weight of the polymer wall precursors to be water soluble and to be solubilized in an aqueous phase at some point during the microencapsulation process.

b) The hydrophobic shell type: the bulk polymer in a shell has a dominant hydrophobic nature. Generally the prior art methods require the majority by weight of the polymer wall precursors to be soluble or partly soluble in the electro-optical fluid to be microencapsulated.

The former type includes conventional and complex coacervation, and interfacial polymerization processes, and up to now coacervation has been demonstrated for electrophoretic ink microencapsulation.

The hydrophilic-shell type of microencapsulation uses at least one significant polymer wall component that is soluble in an aqueous phase and so the resulting shell or capsule wall polymer will be permeable to moisture, or even hydroscopic. Normally, a barrier to the ingress of atmospheric moisture has to be used such as a hermetic sealing wall around the display (i.e., an edge seal). Eink Holdings' US 7,109,968 discloses a technique for microencapsulating electrophoretic ink using a complex coacervation process, and US 6,120,701 discloses a technique for microencapsulating nematic liquid crystal using an interfacial polymerisation process.

In the hydrophobic-shell type, a shell's wall is generally formed from hydrophobic monomers having a slight hydrophilic functionality. Ahead of microencapsulating, the monomers are solubilized partly or completely in the hydrophobic, electro-optical fluid and as polymerization proceeds the polymer phase separates from the electro-optical fluid and forms at the interface with the aqueous phase and microencapsulates the electro-optical fluid with a hydrophobic polymer wall. For examples of liquid crystal microencapsulated in this way see Rohm and Haas Company's US 5,976,405 or PolyDisplay's US 7,397,530.

Most favourably, however, the electro-optical fluid is microencapsulated according to the first aspect to ensure that despite the use of densely-crosslinked, polymer network structure, the shells are mechanically robust (i.e., shells are not brittle). While the latter hydrophobic-shell technique of microencapsulation is preferred, any known technique, whether for hydrophilic shells or hydrophobic shells, can be used in embodiments of the second aspect.

Furthermore co-pending US application entitled "Reflective Display Device" discloses a display device with enhanced diffuse light reflection from the viewer face in its white state by adding at least one additional phase to its electro-optical layer, this additional phase(s) having a different refractive index to the other phases in the layer and making up part of the volume other than the electro-optical fluid phase in the layer. This introduces to the electro-optical layer light scattering centers at the interfaces between phases in the electro-optical layer, the level of diffuse reflected light from the electro-optical layer being a summation of diffuse reflected light from such scattering centers and from the electro-optical fluid phase.

We now turn to printing an electro-optical layer having subpixel regions of different colours. In particular, screen-printing a coloured, microencapsulated, electro-optical layer having contiguous colour regions and fine resolution.

Screen-printing colour images on paper with stencils whereby an image is build up by overprinting with different plasticol ink colours is known. Screen printing is a particularly attractive coating method for coloured, electro-optical ink due to its ability to produce thick layers (10 micron to 100 micron) having an accurately controlled height from paste-like materials and on an industrial scale. However, the prior art only mentions printing a single, electro-optical ink (synonymous with suspension) and fails to recognize or address the unique problems associated with screen-printing multiple inks in contiguous subpixel areas that typically measure from 100 micron to 200 micron across a major axis.

The requirements for screen-printing coloured, subpixel areas are:

a) that coloured, electro-optical inks are printed separately, and that each coloured print is cured before the next is printed;

b) that subpixels are not overprinted by other colours;

c) that the thickness of the differently coloured subpixel prints when cured are about equal to provide a uniform cell gap for the electro-optical layer.

This set of requirements cannot be met by known screen-printing methods because screen printing requires that the squeegee presses the mask (synonymous with mesh or stencil) into contact with the substrate area to be printed in order that capillary action transfers the ink in the mask to the substrate on the mask breaking contact - snapping off. Ink transfers because the inter-molecular attractive forces between the ink and the substrate area brought into contact by the squeegee are greater than those retaining the ink in the mask, and the surface tension (which is caused by cohension within the ink) is sufficient to hold the volume of ink substantially together while it flows from the mask (as the squeegee passes and the mask separates from the substrate), and shearing forces cause the ink to separate at the mask. Put simply, the prior art requires that the squeegee must bring the underside of the mask into contact with the substrate area to be printed.

But in the fabrication of display devices of the second aspect, once the first subpixels' coloured ink is printed, the thickness (typically between 10 micron to 50 micron) of this print on the first subpixels (at very fine spacing equal to the pixel pitch) acts as a height spacer or mechanical stop and prevents the underside of the mask of subsequent ink prints in the set from coming into contact with other subpixel areas (those to be printed with that ink) as the squeegee passes.

In embodiments of the second aspect, the first subpixels' print acts as a mechanical stop because the first colour printed is cured to a solid form before printing the second ink to avoid the second print's mask distorting the first print when it comes into contact with it. If still uncured the first print could be partly squeezed out into neighbouring subpixels areas by the force applied by the second print's passing squeegee. If not sufficiently cured, on snap-off the first print would be partly deposited onto the underside of the masked mesh or stencil. By curing the first print sufficiently before printing the second, solid spacers or mechanical stops are created which prevent the mesh being brought into contact with the print area of subsequent print(s). Indeed a minimum air gap equal to the cured print's thickness is maintained under the mesh for subsequent prints that denies the prior art requirement of screen printing: that the mesh or stencil be brought into contact with the substrate area to be printed as the squeegee passes.

Embodiments of the second aspect overcome the non-contact problem inherent in printing the subsequent coloured, electro-optical inks given that each colour print is cured to a solid before the next print. The embodiments provide a uniform layer height for every subpixel regardless of colour (uniform cell gap for the electro-optical layer) and no cross contamination between subpixel areas.

Trials by the applicant demonstrate that this screen-printing is capable of depositing a defect-free, acceptably flat layer of ink (a monochrome ink comprising microencapsulated, electro-optical fluid in a polymer resin or solution) onto an ITO coated substrate, and of maintaining a uniform thickness (or cell gap) from trial to trial. Furthermore, trials show that printing at the fine resolution demanded by the subpixels in display devices is also compatible with the use of masked meshes / stencils.

Figure 8 shows the result of screen-printing the first coloured, microencapsulated ink. Red subpixels 6 show the levelled print 12 following ink transfer from the stencil to the electrode 11b. Once levelled, the wet print 12 is preferably cured to a solid form by ultra-violet and/or visible light if free-radical polymerisation is used to form polymer 19. If an ink contains a solvent (e.g. to lower the ink's viscosity) then this solvent would typically be evaporated before photocuring. The prior art provides several solutions to overcoming oxygen-inhibition when photocuring the wet, electro-optical, print, for example, covering the wet layer with a nitrogen blanket (i.e. nitrogen rich atmosphere) while curing.

It is observed that photoinitiator blends that combine different chemistries - class I and class II - are particularly suitable for photocuring hydrophobic, electro-optical inks based on acrylate, methacrylate or vinyl monomers. For example, an acylphosphineoxid such as Irgacure 819, an $\alpha$-hydroxyketone such as D1173 (both are available form Ciba Speciality Chemicals), and a benzophenone such as Esacure TZT (2,4,6- trimethylbenzophenone + 4-methylbenzophenone, available from Lamberti Spa) achieve very good through curing of prints from 10 to 100 micron in thickness. Preferably the photoinitiator blend is added at the rate of 1 - 12% by weight of the polymer matrix precursor solution (i.e., including crosslinking and monofunctional monomers), and more preferably at 3 to 8%.

Wet print 12 in figure 8 can also employ a film forming technique whereby an ink's continuous phase (i.e., the liquid suspending the coloured shells) reduces to a solid polymer once its solvent is evaporated. Film forming on evaporation of a solvent can occur due to polymer being present in the form of a latex, or due to polymer being solubilized in the solvent, the latter is preferred if the film forming technique is used for the polymer matrix.

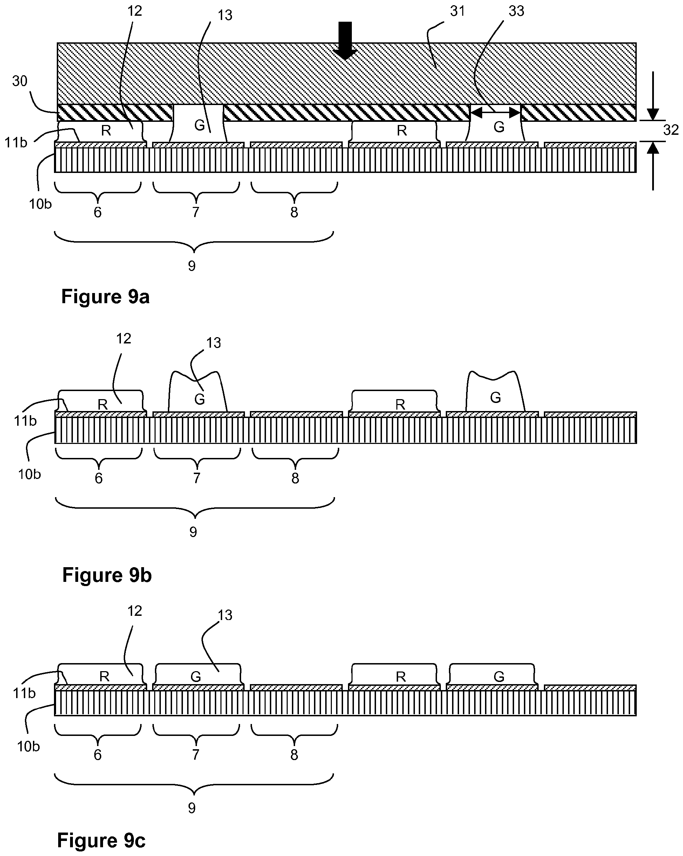

Areas of solid red print 12 are spaced apart at a fine pitch (300 micron to 600 micron) in at least one axis and occupy one third of the display area to be printed (if three subpixels per pixel 9 are used). In figure 9a the stencil 30 rests on the solid prints 12 of the first ink and despite the squeegee pressure, the stencil 30 does not come into contact with electrodes 11b, and an air gap 32 (equal to the print 12's height) exists between the underside of the stencil and the electrode area to be printed.

When screen printing subsequent inks, the squeegee is caused to push excess ink through a subpixel's opening in the mask sufficiently that this excess ink hangs beneath the plane of the underside of the mask and comes into broad contact with the substrate's subpixel area. Having the squeegee push a wave of ink before it (as opposed to the prior art filling of the stencil with a floodbar print and following this with a dry squeegee print) and by manipulating printing speed, squeegee pressure and ink viscosity, the squeegee pushes excess ink through a mask not in contact with a substrate beneath.

Figure 9a shows the second, coloured microencapsulated ink being printed. Squeegee 31 has brought stencil 30 down on the solid print 12. In so doing it has caused ink from the wave being pushed before it to pass through apertures 33 in stencil 30 and come into contact with the electrodes 11b of subpixels 7.

The ink in the mask and the ink on the underside of the mask act as a single volume due to the material cohesion of the ink and this single volume is now in contact with the electrodes of the subpixels to be printed and when the squeegee passes the ink transfers to the substrate's subpixel area. The ink transferred comprises two components: the first is in the gap between the mask underside and the substrate (the first subpixels' print thickness) and the second is within the body of the mask (ink losses occur due to some adhesion to the aperture walls of the mask and due to the squeegee making a concave or dome shape at the top when loading the ink into a mask's apertures). Preferably, the stencil thickness is kept to a minimum for the subsequent print(s).

Figure 9a shows the two components making up the ink 13 about to be transferred to the subpixels 7 when the stencil 30 is snapped-off. The height of the ink volume includes the gap 32 beneath the stencil and the thickness of stencil 30.

For masks used in subsequent print(s), each aperture is reduced in area with respect to its subpixel area so that the volume of ink transferred on snap-off of the stencil equates to the corresponding volume of the first ink print (assuming the subpixel areas of the first print and subsequent print(s) are to be made equal). A reduced aperture area for the subsequent print(s) compensates for the increased height or thickness of ink transferred on snap-off of the stencil, thereby maintaining a uniform volume of ink transferred to subpixel areas for subsequent print(s).

In figure 9a the aperture areas 33 in stencil 30 are reduced in size with respect to the corresponding areas of subpixels 7 causing the average cross sectional area of ink 13 to be smaller also. However the volume of ink 13 transferred to its subpixels' 7 equates with that of cured print 12 as shown unlevelled in figure 9b and levelled in figure 9c.

Ink transferred to a subpixel levels with time and fills substantially or totally its subpixel area after being transferred on snap-off of the mask, resulting in a levelled height or thickness substantially the same as the height of the first ink's print 12 (made possible because both have the same volume of ink transferred to their respective subpixels). In figure 9b the ink 13 is shown in a transitional state having just transferred from the stencil. It is thought that the intermolecular attraction between the ink and the aperture walls counteract the ink's cohesion force to imprint an image of the aperture on the wet ink 13. Over a short time the ink levels and spreads to assume the largely flat profile shown in figure 9c.

In certain embodiments, the ink exhibits thixotropic behaviour (i.e., dependence of viscosity on time), and this behaviour is sufficient to circumvent the conflicting requirements of having an ink with sufficiently low viscosity that it levels well and yet sufficiently high viscosity to maintain material cohesion while printing and avoid undesirable spreading of the transferred ink outside the subpixel area (into neighbouring subpixel areas). The viscosity of a coloured, electro-optical ink falls significantly (by up to a factor of four or more) under the high shear force experienced at snap-off of the mask. The favourable lower viscosity (for levelling) provided by this thixotropic behaviour is maintained for a short period of time after the shear force reduces thereby facilitating levelling of a printed area.

Thixotropic behaviour is dependant on the formation of a network structure of particles or molecules, and in coloured, electro-optical inks suitable for the second aspect, the high loading of shells provides such a network. Upon the application of high-shear during screen-printing the network structure of shells is broken thereby reducing the ink's paste-like viscosity sufficiently to allow the ink to flow. After the high-shearing force stops, the shell network structure begins to form again and the viscosity begins to increase until over time the viscosity of the rest state is recovered.

Advantageously, coloured, electro-optical inks that comprise hydrophobic shells dispersed in hydrophobic polymer matrix precursors exhibit significant thixotropic behaviour, whereas inks that comprise hydrophilic shells in hydrophilic polymer matrix precursors are less so, particularly if water is used as a solvent. In this latter case additives can be necessary to enhance thixotropic behaviour. Suitable thixotropic agents include both organic and inorganic types. For example, organic agents are available from Kusumoto Chemicals, Ltd. (Japan) as part of the Disparlon series.

Turning next to shell loading in a coloured, electro-optical ink (as this is what creates thixotropic behaviour), from geometry, the maximum loading by volume of monodisperse, spherical shells in the monolayer of 14b in figure 5 is 58% (shells touching each other), in a perfectly stacked layer it is 74% and in a randomly stacked layer it is 64%. These are the upper limits achievable with a solvent-free ink assuming the densities of the different phases (electro-optical fluid, shell wall, polymer matrix) are about equal.

In practice, the usable upper viscosity of a solvent-free, electro-optical ink will be its limiting factor on the loading of shells. It must be possible to print the ink by screen-printing. Adding a solvent that is evaporated after coating or printing the ink can circumvent this viscosity limit, however it is environmentally favourable to avoid use of such a solvent. It is advantageous to keep the viscosity of the polymer-matrix, precursor solution low as this maximizes the shell loading for a given ink viscosity. In this regard use of monomers instead of oligomers is preferable. In embodiments, the percentage shell loading by weight in a solvent-free, electro-optical ink is about 40% to 60%, and most preferably about 50% to 55%. These guidelines only apply if the ink doesn't have a solvent, and if shells retain their spherical shape when printed and cured. For example, in embodiments of electro-optical fluid microencapsulated by the complex coacervation technique, it is common for shells to assume a closely packed polyhedron shape on evaporation of a solvent, and the shell loading in the resultant, film-formed solid print can be up to 80%.

In certain embodiments, the coloured, electro-optical ink is paste-like and its viscosity is from 1,000 to 50,000 centipoise (cP), more preferably from 3,500cP to 25,000cP, and most preferably from 5,000cP to 15,000cP.

High surface tension is also a driver of levelling (it is resisted by viscosity) and modifiers can be added to favourably adjust the interfacial tension between an ink and air. For example, lipophilic fluorinated surfactants such as the Masurf FS-1400 and 1900 from Mason Chemical Company can be added to hydrophobic, coloured, electro-optical inks, and hydrophilic fluorinated surfactants such as the Masurf® FS-1700 Series can be added to hydrophilic inks. Wetting agents adjust the interfacial tension between the coating and substrate and can help the print to spread to fill a subpixel area. Suitable types include anionic and cationic surfactants, and nonionic surfactants. The latter are preferred, for example, alkylaryl polyether alcohols available as the Tergitol series, Igepal series and Triton series from Sigma-Aldrich. In addition, the fluorinated surfactants quoted for the air/ink interfacial tension can also be used as wetting agents.

Advantageously, the distance a wet print must spread to fill its subpixel area (see 13 in figures 9b and 9c) is typically ≤ 35 micron for each edge and is minimized by using the thinnest stencil possible for the second and third colour prints (25 micron, electroformed stencils are preferred, see later) and centring the print on a subpixel. For example, a target/levelled subpixel print measuring 150 microns x 150 microns (as per the first subpixel's levelled print), using a 25 micron thick mesh for the second print, and having a volume transfer rate of 90% from the stencil to the substrate, would leave the following print spreading distances (i.e., border all around to be filled by levelling) for the heights indicated:

$$150\mu m \times 150\mu m \times 40\mu m = (\text{aperture X-axis}) \times (\text{aperture Y-axis}) \times 65\mu m \times 0.9$$

spreading distance / border = 12.98 microns;

$$150\mu m \times 150\mu m \times 25\mu m = (\text{aperture X-axis}) \times (\text{aperture Y-axis}) \times 50\mu m \times 0.9$$

spreading distance / border = 19.1 microns;

$$150\mu m \times 150\mu m \times 20\mu m = (\text{aperture X-axis}) \times (\text{aperture Y-axis}) \times 45\mu m \times 0.9$$

spreading distance / border = 22.3 microns.

In general, using the shortest spreading distance and the thickest print maximises levelling.

Preferably the ink is such that it levels in < 5 minutes, more preferably < 1 minute, and most preferably < 10 seconds, of transferring to its subpixel areas on snap-off of the stencil. This ink is then cured (or film-formed) to a solid print before printing subsequent inks. In embodiments the cured print has sufficient strength to withstand the pressure applied to it by the squeegee in subsequent print cycles, and the cured print's top surface has sufficiently cured to minimize or avoid tackiness as this would inhibit snap-off of the stencil in following prints.

Figure 10 shows the print cycle for the blue subpixels 14 and corresponds with the description of figure 9a earlier. Once the blue print is cured the top substrate (10a in figure 7) can be laminated using an optical clear adhesive if the substrate is a film, or applied under vacuum if the top substrate is glass. The polymer matrix precursor solution is preferably used as the optically clear adhesive as it is an index match, and it will develop similar adhesion to the top substrate as developed by the cured print to the bottom substrate. Figures 5 and 7 show embodiments of coloured display devices produced in accordance with the second aspect.

Figure 11 shows how the first screen-printed ink could be printed so that its requirement to spread and level would be similar to that for the second and third coloured inks. The aperture 36 in the mask is similar to the reduced aperture (with respect to a subpixel's area) 33 used in figures 9 and 10 for the second and third coloured ink prints. The mask 35 has a height (or thickness) equal to the height of the levelled and cured print 12 (see figure 9a) plus the height of the mask 30 (see figure 9a) used for the second and third coloured ink prints. In this way on snap-off of the mask, the transferred ink for the first print can be made match that for the second and third prints. This would allow the same ink formulation, just different coloured ink, for each of the coloured prints. Alternatively, the first print can use a mask having an aperture that corresponds to a subpixel's area, and in this case the mask height (thickness) would be close to the levelled (and cured) print height.

Suitable screen printers for printing the electro-optical ink include those used for surface mount technology, semiconductor, and flat panel display applications, for example, those available from DEK International GmbH such as the Horizon, Europa or Galaxy. The screen-printer's stencil (mask or screen) is preferably stainless steel but can also be polyester. Standard meshes in such printers have pore openings that vary in size from 40 microns to 265 microns. If a masked mesh (synonomous with mask) is used to print subpixel areas, then favourably the pore of a mesh coincides with the area of a subpixel to be printed, and the mesh pattern follows the subpixel pattern on the substrate. Alternatively, mesh pores can be wholly or partially masked to correspond with the area on subpixels to be printed (for a given coloured ink and print).

Stencils can also include non-mesh based screens such as laser cut or electroformed stencils, both offering the advantage of smooth, trapezoidal shaped sidewalls that maximize ink transfer to the substrate. In particular, electroformed stencils like those available from DEK are preferred. Up to now use of this stencil has been for printing solder paste in surface mount technology applications. Most favourably, electroformed stencils are well suited to screen-printing coloured electro-optical ink onto subpixel regions and give precise control of the aperture shape and volume of ink transferred. For example, electroformed stencils available from DEK allow a minimum stencil thickness of 25 microns increasing in increments of $25\mu m$, a minimum aperture of $50\mu m$, and a minimum aperture pitch of $100\mu m$.

In embodiments of the second aspect, ink is pushed in a wave before the squeegee and as the mask is brought down onto a prior print on the substrate (subsequent prints) the ink is forced by the squeegee through apertures in the mask sufficiently for the ink to come into contact with the substrate underneath even though there is a gap (equal to the cured print height) between the mask underside and the substrate area to be printed. If the print height required is so great that sufficient ink cannot be pushed through a mask's aperture to make broad contact with the substrate beneath, then two (or more) sets of printing can be used, each set printing a fraction of the required thickness. For example, if a cured print height of 80 microns is required then the first set of prints (one for each coloured ink) would result in a layer 40 microns high and then the second set would increase this to 80 microns while maintaining the gap between the underside of the stencil and the substrate area to be printed at 40 microns.

In embodiments, a print can be induced to remain at or inside a subpixel area even though a coloured ink is required to spread as it levels. The gap between electrodes and/or the edge of electrodes can be treated with a low surface energy coating to hinder wetting of such areas by an ink. Examples of suitable material for a low surface energy coating include fluoropolymers such as Teflon AF from Dupont and CYTFOP from Asahi Glass.

**Claims**

1.  A method of microencapsulating electro-optical fluid comprising: dispersing the electro-optical fluid as discrete droplets in a continuous aqueous phase, said droplets having at least partly solubilized therein crosslinkable polymer precursors, wherein the level of crosslinking monomers within said polymer precursors by weight is $\geq 25\%$; and thermally initiating free-radical polymerisation of said polymer precursors to microencapsulate droplets of said electro-optical fluid inside respective generally spherical polymer shells, the polymer wall of each shell having a densely-crosslinked, polymer-network structure to provide chemical resistance, and the polymer wall of each shell having spacing within the crosslinks of said densely-crosslinked, polymer network structure to provide mechanical flexibility.

2.  A method according to claim 1 wherein the level of crosslinking monomers to overall monomer within said polymer precursors by weight is $\geq 50\%$, preferably $\geq 75\%$ , and more preferably approximately 100%.

3.  A method according to claim 1 comprising, during said polymerization, forming polymer network fractions by using a high density of crosslinks between polymer chains and in so forming, said polymer network fractions are insoluble in the electro- optical fluid droplet.

4.  A method according to claim 3 wherein said polymer network fractions are sufficiently hydrophilic to be driven out of the electro-optical fluid droplet and to continue growing and gel at an interface between the electro-optical fluid droplet and the aqueous phase.

5.  A method according to claim 4 wherein the monomer components of the polymer precursors have a water solubility (expressed as millilitres of monomer solubilized per litre of water) within the range 0.101 ml/L to 99ml/L, more preferably, 0.5ml/L to 40ml/L, and most preferably, 1 ml/L to 30ml/L.

6.  A method according to claim 2 comprising balancing the reactivities of the different monomers in the polymer precursor solution to avoid monofunctional monomers forming sol fractions during polymerization and thereby ensuring that the bulk volume of a microencapsulated electro-optical droplet is free of polymer fractions or polymer structures upon completion of polymerization.

7.  A method according to claim 2 wherein at least the majority of the crosslinking monomer has two functional groups.

8.  A method according to claim 2 wherein at least the majority of the crosslinking monomer has a diol unit in its backbone.

9.  A method according to claim 2 wherein at least the majority of the crosslinking monomer is chosen from: ethylene glycol dimethacrylate, ethylene glycol diacrylate, diethylene glycol dimethacrylate, diethylene glycol diacrylate, triethylene glycol dimethacrylate, triethylene glycol diacrylate, propylene glycol dimethacrylate, propylene glycol diacrylate, dipropylene glycol dimethacrylate, dipropylene glycol diacrylate, glycerol dimethacrylate, glycerol diacrylate, neopentyl glycol dimethacrylate, neopentyl glycol acrylate, butanediol dimethacrylate, butanediol diacrylate, hexanediol dimethacrylate, and hexanediol diacrylate.

10. A method according to claim 1 comprising providing a polymer pre-cursor formulated to form glassy, amorphous polymer that is free of a glass transition temperature.

11. A method according to claim 1 comprising forming shells to have a wall thickness of between 0.25 micron and 5 microns, and more preferably between 0.35 microns and 3.5 microns.

12. A method according to claim 1 further comprising recovering said microencapsulated shells from said aqueous suspension as a fine powder.

13. A display device incorporating microencapsulated shells obtainable according to the method of claim 1, said shells disposed in an electro-optic layer between opposite electrode-coated substrates, at least one of which is transparent.

14. A display device according to claim 13 including one of: an electrophoretic display device incorporating hydrophobic microencapsulated shells in a hydrophobic polymer matrix; a liquid crystal light control film incorporating hydrophobic microencapsulated shells in a hydrophobic polymer matrix; or a liquid crystal display device incorporating fully crosslinked microencapsulated shells in a hydrophobic polymer matrix.

15. Electro-optical fluid including microencapsulated shells obtainable according to the method of claim 1.

16. Electro-optical shell powder comprising microencapsulated shells obtainable according to the method of claim 1.


**Patentansprüche**

1. Verfahren zur Mikroverkapselung eines elektrooptischen Fluids, umfassend:
Dispergieren des elektrooptischen Fluids als diskrete Tröpfchen in einer kontinuierlichen wässrigen Phase, wobei die Tröpfchen zumindest teilweise darin solubilisierte vernetzbare Polymervorläufer aufweisen, wobei der Anteil vernetzbarer Monomere innerhalb der Polymervorläufer ≥ 25 Gew.-% beträgt; und thermisches Initiieren einer radikalischen Polymerisation der Polymervorläufer zum Mikroverkapseln von Tröpfchen des elektrooptischen Fluids innerhalb jeweiliger im Allgemeinen kugelförmiger Polymerhüllen, wobei die Polymerwand jeder Hülle eine dicht vernetzte Polymernetzstruktur aufweist, um chemische Beständigkeit bereitzustellen, und die Polymerwand jeder Hülle Zwischenräume innerhalb der Vernetzungen der dicht vernetzten Polymernetzstruktur aufweist, um mechanische Flexibilität bereitzustellen.

2. Verfahren nach Anspruch 1, wobei der Anteil vernetzender Monomere an dem gesamten Monomer innerhalb der Polymervorläufer ≥ 50 Gew.-%, vorzugsweise ≥ 75 Gew.-% und mehr bevorzugt etwa 100 Gew.-% beträgt.

3. Verfahren nach Anspruch 1, umfassend Bilden von Polymernetzfraktionen während der Polymerisation unter Verwendung einer hohen Dichte von Vernetzungen zwischen Polymerketten und wobei bei einer solchen Bildung die Polymernetzwerkfraktionen in dem Tröpfchen des elektrooptischen Fluids unlöslich sind.

4. Verfahren nach Anspruch 3, wobei die Polymernetzfraktionen ausreichend hydrophil sind, um aus dem Tröpfchen des elektrooptischen Fluids herausgetrieben zu werden und um an einer Grenzfläche zwischen dem Tröpfchen des elektrooptischen Fluids und der wässrigen Phase weiter zu wachsen und zu gelieren.

5. Verfahren nach Anspruch 4, wobei die Monomerkomponenten der Polymervorläufer eine Wasserlöslichkeit (ausgedrückt als Milliliter pro Liter Wasser solubilisiertes Monomer) im Bereich von 0,101 ml/l bis 99 ml/l, mehr bevorzugt 0,5 ml/l bis 40 ml/l und am meisten bevorzugt 1 ml/l bis 30 ml/l aufweisen.

6. Verfahren nach Anspruch 2, umfassend Ausgleichen der Reaktivitäten der verschiedenen Monomere in der Polymervorläuferlösung, um zu vermeiden, dass monofunktionelle Monomere Solfraktionen während der Polymerisation bilden, und dadurch Sicherstellen, dass das Hauptvolumen eines mikroverkapselten elektrooptischen Tröpfchens nach Abschluss der Polymerisation frei von Polymerfraktionen oder Polymerstrukturen ist.

7. Verfahren nach Anspruch 2, wobei mindestens der Hauptteil des vernetzenden Monomers zwei funktionelle Gruppen aufweist.

8. Verfahren nach Anspruch 2, wobei mindestens der Hauptteil des vernetzenden Monomers eine Dioleinheit in seinem Rückgrat aufweist.

9. Verfahren nach Anspruch 2, wobei mindestens der Hauptteil des vernetzenden Monomers aus Folgendem ausgewählt ist: Ethylenglycoldimethacrylat, Ethylenglycoldiacrylat, Diethylenglycoldimethacrylat, Diethylenglycoldiacrylat, Triethylenglycoldimethacrylat, Triethylenglycoldiacrylat, Propylenglycoldimethacrylat, Propylenglycoldiacrylat, Dipropylenglycoldimethacrylat, Dipropylenglycoldiacrylat, Glycerindimethacrylat, Glycerindiacrylat, Neopentylglycoldimethacrylat, Neopentylglycolacrylat, Butandioldimethacrylat, Butandioldiacrylat, Hexandioldimethacrylat und Hexandioldiacrylat.

**10.** Verfahren nach Anspruch 1, umfassend Bereitstellen eines Polymervorläufers, dazu formuliert, ein glasiges, amorphes Polymer zu bilden, das keine Glasübergangstemperatur aufweist.

**11.** Verfahren nach Anspruch 1, umfassend Bilden von Hüllen mit einer Wanddicke zwischen 0,25 Mikron und 5 Mikron und mehr bevorzugt zwischen 0,35 Mikron und 3,5 Mikron.

**12.** Verfahren nach Anspruch 1, ferner umfassend Gewinnen der mikroverkapselten Hüllen aus der wässrigen Suspension als ein feines Pulver.

**13.** Anzeigevorrichtung, einbeziehend mikroverkapselte Hüllen, die nach dem Verfahren nach Anspruch 1 erhältlich sind, wobei die Hüllen in einer elektrooptischen Schicht zwischen gegenüberliegenden elektrodenbeschichteten Substraten angeordnet sind, von denen mindestens eines transparent ist.

**14.** Anzeigevorrichtung nach Anspruch 13, enthaltend eines der Folgenden: eine elektrophoretische Anzeigevorrichtung, einbeziehend hydrophobe mikroverkapselte Hüllen in einer hydrophoben Polymermatrix; eine Flüssigkristall-Lichtkontrollfolie, einbeziehend hydrophobe mikroverkapselte Hüllen in einer hydrophoben Polymermatrix; oder eine Flüssigkristallanzeigevorrichtung, einbeziehend vollständig vernetzte mikroverkapselte Hüllen in einer hydrophoben Polymermatrix.

**15.** Elektrooptisches Fluid, enthaltend mikroverkapselte Hüllen, die nach dem Verfahren von Anspruch 1 erhältlich sind.

**16.** Elektrooptisches Hüllenpulver, umfassend mikroverkapselte Hüllen, die nach dem Verfahren von Anspruch 1 erhältlich sind.

## Revendications

**1.** Procédé de micro-encapsulation d'un fluide électro-optique comprenant :
la dispersion du fluide électro-optique sous forme de gouttelettes distinctes dans une phase aqueuse continue, lesdites gouttelettes comprenant des précurseurs de polymères réticulables au moins en partie solubilisés en leur sein, dans lequel la proportion en poids de monomères de réticulation à l'intérieur desdits précurseurs de polymères est $\geq 25$ % ; et l'initiation par voie thermique de la polymérisation radicalaire desdits précurseurs de polymères pour micro-encapsuler des gouttelettes dudit fluide électro-optique à l'intérieur d'enveloppes polymères respectives, généralement sphériques, la paroi polymère de chaque enveloppe ayant une structure en réseau polymère réticulée de manière dense pour conférer une résistance chimique, et la paroi polymère de chaque enveloppe comprenant un espacement à l'intérieur des liaisons réticulaires de ladite structure en réseau polymère réticulée de manière dense pour conférer une flexibilité mécanique.

**2.** Procédé selon la revendication 1, dans lequel la proportion en poids de monomères de réticulation par rapport à la quantité totale de monomères à l'intérieur desdits précurseurs de polymères est $\geq 50$ %, de préférence $\geq 75$ %, et de manière davantage préférée d'approximativement 100 %.

**3.** Procédé selon la revendication 1, comprenant, pendant ladite polymérisation, la formation de fractions de réseaux polymères à l'aide d'une densité élevée de liaisons réticulaires entre les chaînes de polymères et grâce à cette formation, lesdites fractions de réseaux polymères sont insolubles dans la gouttelette de fluide électro-optique.

**4.** Procédé selon la revendication 3, dans lequel lesdites fractions de réseaux polymères sont suffisamment hydrophiles pour être extraites de la gouttelette de fluide électro-optique et pour continuer à croître et se gélifier à une interface entre la gouttelette de fluide électro-optique et la phase aqueuse.

**5.** Procédé selon la revendication 4, dans lequel les constituants monomères des précurseurs de polymères présentent une solubilité dans l'eau (exprimée en millilitres de monomère solubilisé par litre d'eau) située dans la plage allant de 0,101 ml/l à 99 ml/l, de manière davantage préférée, de 0,5 ml/l à 40 ml/l, et de manière préférée entre toutes, de 1 ml/l à 30 ml/l.

**6.** Procédé selon la revendication 2, comprenant l'équilibrage des réactivités des différents monomères dans la solution de précurseurs de polymères afin d'éviter que des monomères monofonctionnels ne forment des fractions de sols pendant la polymérisation et garantissant ainsi que le volume apparent d'une gouttelette électro-optique micro-encapsulée soit exempt de fractions polymères ou de structures polymères à la fin de la polymérisation.

7. Procédé selon la revendication 2, dans lequel au moins la majorité du monomère de réticulation comprend deux groupes fonctionnels.

8. Procédé selon la revendication 2, dans lequel au moins la majorité du monomère de réticulation comprend un motif diol dans son squelette.

9. Procédé selon la revendication 2, dans lequel au moins la majorité du monomère de réticulation est choisi parmi : un diméthacrylate d'éthylène glycol, un diacrylate d'éthylène glycol, un diméthacrylate de diéthylène glycol, un diacrylate de diéthylène glycol, un diméthacrylate de triéthylène glycol, un diacrylate de triéthylène glycol, un diméthacrylate de propylène glycol, un diacrylate de propylène glycol, un diméthacrylate de dipropylène glycol, un diacrylate de dipropylène glycol, un diméthacrylate de glycérol, un diacrylate de glycérol, un diméthacrylate de néopentyle glycol, un acrylate de néopentyle glycol, un diméthacrylate de butanediol, un diacrylate de butanediol, un diméthacrylate d'hexanediol et un diacrylate d'hexanediol.

10. Procédé selon la revendication 1, comprenant l'utilisation d'un précurseur de polymère formulé pour former un polymère vitreux amorphe qui n'a pas de température de transition vitreuse.

11. Procédé selon la revendication 1, comprenant la formation des enveloppes de sorte qu'elles aient une épaisseur de paroi entre 0,25 micron et 5 microns, et de manière davantage préférée entre 0,35 micron et 3,5 microns.

12. Procédé selon la revendication 1, comprenant en outre la récupération desdites enveloppes micro-encapsulées à partir de ladite suspension aqueuse sous forme de poudre fine.

13. Dispositif d'affichage incorporant les enveloppes micro-encapsulées pouvant être obtenues selon le procédé de la revendication 1, lesdites enveloppes étant disposées dans une couche électro-optique entre des substrats revêtus d'électrodes opposées, dont au moins un est transparent.

14. Dispositif d'affichage selon la revendication 13, comprenant un élément parmi : un dispositif d'affichage électrophorétique incorporant les enveloppes micro-encapsulées hydrophobes dans une matrice polymère hydrophobe ; un film de régulation de la lumière à cristaux liquides incorporant les enveloppes micro-encapsulées hydrophobes dans une matrice polymère hydrophobe ; ou un dispositif d'affichage à cristaux liquides incorporant les enveloppes micro-encapsulées complètement réticulées dans une matrice polymère hydrophobe.

15. Fluide électro-optique comprenant les enveloppes micro-encapsulées pouvant être obtenues selon le procédé de la revendication 1.

16. Poudre d'enveloppes électro-optiques comprenant les enveloppes micro-encapsulées pouvant être obtenues selon le procédé de la revendication 1.

**Figure 1**

**Figure 2**

**Figure 3**

10a
11a
11b
10b

3

24

16

19

24a

19

18

17

16

24b

**Figure 4**

12   13   14   15

10a
11a

R   G   B   R   G   B

11b
10b

6   7   8

9

1

16

19

14a

19   18   17

16

14b

**Figure 5**

**Figure 6**

**Figure 8**

**Figure 12**

**Figure 13**

**Figure 9a**

**Figure 9b**

**Figure 9c**

Figure 7

Figure 10

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IE S20120033
- IE S20120035
- EP 2008005151 W
- US 7411719 B
- US 6120701 A
- US 7109968 B
- US 5976405 A
- US 7397530 B
- US 7041304 B
- IE 0200079 W
- IE 0200124 W
- US 7417787 B
- US 20100044894 A
- US 7119859 B
- US 6556262 B

**Non-patent literature cited in the description**

- **IAN D. MORRISON ; SYDNEY ROSS.** *Colloidal Dispersions: Suspensions, Emulsions, and Foams,* 2002